# EUROPEAN PATENT APPLICATION

(11) **EP 2 172 264 A1**
(43) Date of publication of application: **07.04.2010**
(21) Application number: 08150004.3
(22) Date of filing: 02.01.2008
(51) Int. Cl.: B01J 13/04

(54) **Process and apparatus for the production of microcapsules**

(71) Applicant: Ziel Biopharma Ltd, Corbally Limerick (IE)
(72) Inventor: Hauser, Oliver, 1130 Wien (AT)
(74) Representative: Fleuchaus, Andrea

(57) **Abstract**

The present invention relates to an apparatus and a method for producing microcapsules. The apparatus according to the invention comprises at least one bead generator, having at least one nozzle passed by a liquid during operation, with a liquid reservoir arranged before the nozzle. The liquid reservoir comprises a membrane in the region of at least one boundary wall for generating a mechanical oscillation in the liquid. The apparatus comprises at least one reaction and transport device passed by a reaction medium, in which the beads generated in the bead generator are received. Microcapsules are formed during a predetermined reaction time period between at least one first polymeric component of the beads and at least one second polymeric component in the reaction medium and are transported along a reaction path. The apparatus is characterized in that at least one electrode, movable substantially parallel to the nozzle axis by a drive, is arranged between the bead generator and the reaction and transport device, which generates an electric field between an outlet region of the nozzle and the electrode for influencing the bead properties. The invention further includes a use of the apparatus for producing microcapsules and a method for controlling the apparatus.

## Description

The present invention relates to an apparatus and method for producing microcapsules, for example for encapsulating bacterial, plant and animal cells or tissues, or biological or chemical substances and a method for controlling the apparatus.

Apparatuses for manufacturing microcapsules are known in the prior art and have attained considerable importance, in particular for the encapsulation of various substances as well as for use in the chemical, industrial processing and biotechnological fields as well as in medicine.

For example, the production of microcapsules is known in the prior art, by which sodium cellulose sulphate (NaCS) as a poly-anion is dropped into a poly-cationic solution of poly (diallyldimethyl ammonium chloride) (Poly-DADMAC). The sodium cellulose sulphate solution dropped into the poly-cationic solution forms a solid, semi-permeable polymer membrane through a reaction with poly (diallyldimethyl ammonium chloride) as the capsule wall, which surrounds the liquid core of the resulting microcapsules.

The formation of microcapsules themselves in this method takes place over several steps, where after immersing the poly-anionic NaCS beads in the poly-cationic complex-forming bath, a complex is formed on the bead surface due to boundary surface reactions of the oppositely charged reactants, which forms a semi-permeable membrane. The further membrane formation is dependent, among other things, on the diffusion properties, i.e. it continues only as long as the reaction substrate can permeate through the membrane. The penetration of poly-DADMAC is simplified by the presence of sodium chloride. A complete hardening of the capsules can result with the corresponding solutions.

A capsule produced in this manner normally comprises an outer layer followed by a loose zone and then a porous wall, the structure becomes looser toward the capsule interior. The membrane encloses a liquid core in the interior, in the present case the solution of sodium cellulose sulphate, which can serve for example as a carrier for pharmaceutical substances.

Of particular interest are capsules for enclosing living biological systems, especially microorganisms, yeast cells, eukaryotic cells, tissue or sperms, or capsules for enclosing chemical and biological substances, especially enzymes, nucleic acids, proteins, catalysts, natural substances and/or pharmaceutical substances.

A so-called Enkapsulator AP® (Inotech Biosystems, Switzerland) is also known in the prior art, which forms beads to be transferred into a reaction medium. Such an encapsulator includes a perfusor drive which pushes a NaCS solution with defined velocity through a nozzle and thus generates a continuous liquid flow. The liquid flow is forced to oscillate by a frequency generator, where the superimposed oscillation causes the break-off of the outlet liquid stream or jet into beads of equal volume.

In order to improve the mono-dispersibility of the beads and at the same time to reduce coalescence, an electric field is provided after the nozzle outlet in such an encapsulator. Electrostatic charging in the free phase causes a repulsion of the individual beads, so that an aggregation of the individual beads up to entry into the complex-forming bath is substantially prevented.

The beads formed in this manner are received in a complex-forming bath, within which at the outer membrane of the capsule is formed through the reaction, for example between the NaCS and a poly-DADMAC solution. With constant mixing, the capsules remain in this system until reaching a desired hardening degree in the corresponding container and are then available for further processing.

A drawback of the prior art systems however is that the quality and the properties of the produced microcapsules can only be evaluated after completing the production process. An adjustment of the numerous process parameters, which determines the shape, quality and amount of the microcapsules, can only be made, if at all, with great effort and experience of the manufacturer, in order to achieve an acceptable and uniform quality of the so-produced microcapsules.

A further drawback is that only small batches of microcapsules can be produced in the apparatus according to the prior art, although it would be desired to have a substantially continuous manufacturing process or to provide an apparatus for producing microcapsules in a continuous process. In particular, after adjustment of the optimal operation parameters, this would allow the process to be continued so that both the quality of the amount of microcapsules can be adapted to the individual needs of the user.

A further drawback is that the control of the relevant process parameters in the known apparatuses and method can only take place manually and is dependent on the experience and skill of the respective operator. It is therefore an object of the present invention to provide a control for the encapsulation process by which the determination of the relevant process parameters takes place continuously with the aid of sensors and the detected signals are used for controlling the relevant parameters. The process is preferably configured to be self-optimizing.

The object of the present invention is achieved through an apparatus for producing microcapsules according to claim 1. The object of the invention is also achieved by the present invention through the method according to claims 22 and 30. Preferred embodiments of the apparatus and the method, as well as the method for controlling the apparatus, are the subject matter of the dependent claims.

The apparatus for producing microcapsules according to the present invention comprises at least one bead generator in particular with a liquid reservoir, which includes at least one inlet and one outlet for at least one liquid. Preferably, the outlet or the discharge side of the bead generator comprises at least one nozzle, through which the liquid preferably passes during operation. The liquid reservoir comprises at least one membrane in the region of its enclosing walls, which is used for generating mechanical oscillations in the liquid. The generation of oscillations in the liquid can take place directly or indirectly through the membrane and is correspondingly introduced into the liquid.

Alternatively, the oscillations can be transmitted directly, without use of a membrane, for example through the nozzle.

According to a preferred embodiment, the generation of oscillation takes place for example piezo-electrically, pneumatically, electro-acoustically or with another device, as is known in the prior art. Preferably, such a device is freely variable both with respect to frequency and amplitude in the largest possible range.

The apparatus further comprises at least one reaction and transport device through which a reaction medium passes and into which the beads generated by the bead generator are received as described above. For this purpose, the device according to a preferred embodiment comprises a corresponding collecting tray.

The beads received in the reaction medium are moved during a predetermined reaction time period in the reaction medium, or preferably transported, where the complex formation occurs preferably between at least one first component contained in the beads and at least one second component contained in the reaction medium. As described above, the outer membrane is formed through this reaction on the boundary surface between the bead and the reaction medium, which grows with increasing reaction time period, whereby the desired microcapsules are produced.

The apparatus according to the invention is characterized in that at least one electrode is arranged between the bead generator and the reaction and transport device, which is movable by a drive substantially parallel to the nozzle axis. This electrode generates an electric field, in particular between the outlet region of the nozzle and the electrode surface and influences the bead properties and in particular serves for electrically charging the beads.

According to the present invention, the nozzle axis will be understood to be that which results from the main flow direction of the liquid through the nozzle.

The influence on the bead properties from the electric field, which is produced by the electrode between the nozzle outlet and the movable electrode, is understood according to the present invention in that the formation of the beads from the liquid stream is such that a charge rearrangement is caused by the electric field, in particular on the bead surface, in such a manner that the produced beads have an electrical charge. This charge is preferably strong enough that the beads having the same charge repulse one another and the separation of the beads before entering into the reaction and transport device or into the reaction medium is guaranteed or improved. Furthermore, a so-called dispersion effect results through the same charge of the beads, where the beads are preferably broadly distributed on the path from the nozzle outlet to the reaction and transport device or to the reaction medium. In this manner, an aggregation or sticking of the beads to one another is prevented or reduced.

According to a particularly preferred embodiment of the present apparatus, at least one means or preferably a plurality of means are provided for controlling the individual components of the apparatus. This can be for example the position of the electrodes, the mechanical oscillation in the liquid in the bead generator, the volumetric flow rate of the employed media, for example the liquid in the bead generator or the reaction medium in the reaction and transport device or the dilution solution for completing the reaction between the reaction medium and the beads, the electric field between the electrodes, combinations hereof and the like.

According to the present invention, the electrode position represents the distance of the electrode from the nozzle outlet, where the movement direction of the electrode is preferably substantially parallel to the nozzle axis.

The mechanical oscillation in the liquid of the bead generator is understood to be an oscillation by which the oscillation frequency and also the amplitude are variable.

The electric field between the electrodes is determined by the potential difference between the electrode and the nozzle outlet as a further electrode, where according to a further particularly preferred embodiment an anode as well as a cathode is used as the movable electrode, respectively.

According to a further particularly preferred embodiment of the present invention, the apparatus comprises means for detecting the process parameters, which are selected from a group consisting of optical sensors, lasers, inductive and/or capacitive sensors, conductive sensors, ultrasonic sensors, expansion measurement strips, piezo-electric sensors, Ptc sensors, Ntc sensors, IR sensors, turbidity sensors, particle analyzing sensors, pt 100 sensors, image processing sensors, swimmers, vibration sensors. It is also understood according to the invention that a combination of such sensors or corresponding alternative sensors known in the prior art can be used for determining the process parameters.

According to the present invention, the process parameters are understood as properties of the apparatus or parameters of the process operation for producing microcapsules or microcapsules themselves, which preferably are selected from the group consisting of bead size, bead shape, the volumetric flow rate or flow velocity, the flow velocity, the transparency, the pH value, the concentrations, in particular of the individual or plurality of components, for both the beads as well as the reaction medium or the dilution solution, the reaction time period, the passage capacity of the flow path, the potential difference between the electrodes and the resulting electric field, combinations hereof and the like.

Furthermore, the mentioned means for control according to the invention will also be understood as means for regulation of the apparatus for producing microcapsules, where apart from components, also groups of components or process parameters of the apparatus are controlled or regulated.

Controlling is understood as an operation within the system by which one or more parameters as input parameters are influenced by other parameters as output parameters on the basis of conditions particular to the system.

Regulation is understood as an operation by which a parameter (present value) is continuously detected as the regulated parameter, compared with another parameter, namely the lead parameter (desired value) and depending on the result of the comparison influences the regulated parameter in the sense of adjusting it to the desired value of the lead parameter.

According to a further particularly preferred embodiment of the present invention, the control and regulation of the apparatus takes place substantially in "real time" and the reaction of the system takes place within a pre-determined "reaction time period". This means that the signals made available by the means for determining the process parameters are directly used for controlling and/or regulating the components, groups of components or process parameters of the apparatus. The term directly is understood here in that a process takes place, which is substantially made in the shortest possible time, or a pre-determined dead time is present between the determination and the control or regulation.

The term "real time" means that a system must react to an event within a pre-determined time frame. The velocity or the processing performance of a system or part of a system is determined by the "reaction time". The "reaction time" describes the time for a complete change from one process of low priority to a process of higher priority. This change is introduced when a defined event occurs. The execution of a selected process begins only after the process change has taken place.

The requirements of automation task management will determine which real time system is employed.

A "sensor" or "detector" or "sensing element" in the sense of the present invention is a technical component, which can determine qualitatively or quantitatively as a measurement value the physical or chemical property and/or the material constitution. These parameters are detected by means of physical or chemical effects and converted into processible parameters (usually electrical signals). The term "sensor", "sensors" or "sensor group" are used interchangeably, independent of whether they are assigned a reference sign, i.e. either a single detector or also a number of similar or different detectors in combination can be used.

According to a particularly preferred embodiment of the present invention, the control of the apparatus takes place for example in that the shape, size, density and/or transparency of the produced microcapsules are determined in operation through, for example, optical sensors for at least one location and, depending on the results, the position of the electrodes or the electric field, the flow velocity or the volume flow rate in the bead generator and/or the frequency of the generated oscillations in the liquid of the bead generator are controlled.

For example, a high transparency of the microcapsules after reaction between the components can indicate an insufficient formation of the capsule wall or an insufficient reaction time period. As a consequence, reaction time period must be increased, which can take place for example by prolonging the duration in the complex-forming bath, for example by reducing the flow velocity in the transport and reaction device or the corresponding reaction medium. Since the degree of complex formation has an effect on the capsule size, an adaptation of the reaction time period must be accompanied by a parallel change of the bead size. In the described example an enlargement of the capsule size takes place by reducing the oscillation frequency at the outlet nozzle or by increasing the flow rate (other conditions remaining constant).

As a further example of such controlling or regulating, an undesired heterogeneous form of the microcapsules (size and shape) can be corrected by varying the axial position of the electrodes or the applied voltage for generating the electric field between the nozzle outlet and the transport and reaction device. This achieves a more homogeneous result in respect of the shape and size of the microcapsules.

The axial position/adjustment of the electrode is determined and preferably regulated for example on the basis of the break point of the liquid droplet (the so called jet break).

Alternative to the variable process parameters, for example the strength and position of the electric field or the flow velocity of the media or the volumetric flow rate, it is possible in the present invention that parameters can be adjusted such as the temperature, salt content or concentration and/or type of reaction component and/or the reactively neutral diluents, the dilution and cleaning process as well as combination hereof and the like. These adjustments can be made before or during operation of the apparatus or adapted to the result to be achieved.

Under some circumstances it is also necessary during production that a change of parameters is possible, especially for ensuring sterile conditions, for which corresponding control and regulation means are provided within the apparatus, to provide a germ-free and environmentally isolated condition for producing microcapsules. Material which is conform with FDA USP Class VI and/or borosilicate glass is preferred for components coming into contact with at least one solution used in the process or with synthetic materials. The particularly relevant process parameters for producing large amounts of microcapsules include, among others, the bead shape, the oscillation frequency or amplitude in the bead generator and the strength of the electric field. Relevant reaction conditions for formation of the outer wall of the microcapsules are, among others, the concentration of the second reaction component such as poly-DADMAC or the reaction time period between the two components.

In both cases, a regulation and control system can be realized in a particularly preferred embodiment, by which the corresponding properties of the produced microcapsules can be detected for example optically or by means of ultrasonic sensors and provided as electric signals for further processing in a corresponding process controller. On the basis of these measurements, a corresponding regulation cycle in combination with the corresponding control means can take place.

According to a further particularly preferred embodiment of the present invention, a membrane for generating the mechanical oscillation is made of at least one material selected from the group consisting of steel, in particular stainless refined steel, synthetic material, for example poly(ether ether ketone) (PEEK), composite materials, combinations hereof and the like. Furthermore, the membrane preferably has a thickness between 5 □m and 500 □m, preferably between 20 □m and 160 □m and most preferably between 50 □m and 90 □m.

According to a further particularly preferred embodiment, the membrane is arranged in a region of the liquid reservoir, such that the membrane seals the liquid reservoir of the bead generator against the environment, apart from generating the mechanical oscillations in the liquid.

To produce oscillations in the liquid, the membrane vibrates in operation with a frequency between 100 Hz and 4000 Hz and preferably between 400 Hz and 3000 Hz, where the amplitude is variable and can be adjusted continuously variable.

According to a particularly preferred embodiment of the present invention, the drive of the movable electrode is a drive selected from the group consisting of electrical, hydraulic and/or pneumatic motors. The drive according to the invention can directly or indirectly cause the movement of the at least one electrode.

The electrode is further configured with at least one, substantially hollow cylindrical section, through which the beads from the nozzle outlet of the bead generator drop into the reaction and transport device. It will also be understood that other alternative configurations of the electrode can be used for generating an electric field between the nozzle outlet and the reaction and transport device.

In operation, the distance between the electrode and the nozzle outlet should be selected such that it is variable in a range of 1 mm to 300 mm preferably 5 mm to 100 mm, particularly between 20 mm and 40 mm and more particularly is 30 mm.

To generate the corresponding electric field, a potential is applied to the movable electrode (voltage), so that the potential difference between the outlet region of nozzle and the electrode lies between 0.5 kV and 3 kV, where the range of between 0.8 kV and 1.5 kV is particularly preferred.

It will be understood according to the present invention that apart from at least one movable electrode, preferably in the outlet region of the nozzle, a further electrode can be provided for directly influencing the strength, the orientation and the position of the generated electric field.

The apparatus of the present invention for producing microcapsules is further characterized in that the liquid of the bead generator (polymer solution A) is preferably a polymeric poly-anion, preferably alginate, caboxymethyl cellulose, carrageenan, cellulose sulphate, chondroitin sulphate, dextrane sulphate, heparin, poly(methylene-co-guanidine) or poly(styrene sulfonate) and preferably ester derivatives of cellulose and most preferably sodium cellulose sulphate (NaCS) as the first component. The concentration of this first component according to a preferred embodiment of the present apparatus for producing micro capsules lies in the range of 0.5% to 4.0%. The liquid further has a viscosity in the range of 10 mPa to 500 mPa, preferably 10 mPa to 200 mPa. The viscosity is determined by a Bohlin Visco 88 Viscometer (Bohlin Reologim, Sweden).

The second component (polymer solution B) as the reaction partner for the poly-anion for forming the outer shell of the capsule is present in the reaction medium, which flows through the reaction and transport device The second component is present as a poly-cation, which is preferably a Lewis salt of a polymeric amine. It is further preferred that the second component is selected from the group consisting of dodecylamine, ethylene diamine, piperazine, methylene blue, arginine triethyltetramine, spermine, in particular polymers with quarternary ammonium groups and most particularly poly(dimethylallyl ammonium chloride) (poly-DADMAC) or poly(vinylbenzyltrimethyl ammonium chloride), which are preferably present in a concentration range of 0.5 to 5.0%.

For capsules made of alginate, bivalent cations as counter ions are also normally used. Apart from capsules formed of one type of polymeric poly-anions and a component of polymeric poly-cations, combinations of different polymer poly-anions can naturally also be employed. By correspondingly arranging the complex-forming baths, additional layers of different polymers can also be deposited on the capsule wall. Known systems in the prior art are for example alginate/cellulose sulphate/poly(methylene-co-guanidine) or alginate/chitosane/poly(ethylene glycol).

Multi-layered capsules according to the present invention can alternatively be produced by means of concentric nozzles, where one concentric nozzle forms the core of a concentric arrangement of two nozzles. A second nozzle is formed in ring shape outside the first nozzle, so that two different substances can be provided through the inner nozzle and mantle nozzle. For example one polymer solution can exit the mantle nozzle and the material to be enclosed exits the inner nozzle, without mixing, in the form of a concentric material stream or jet out of the concentric nozzle arrangement. After the bead breaks off, the polymer solution spherically surrounds the solution with the substance to be encapsulated.

It will be understood according to the present invention that combinations and corresponding alternatives can be used as the reaction partner in the given concentration ranges. It is noted that the concentration range can be selected substantially depending on the reaction time period, in order to influence the outer shell formation of the microcapsules when the apparatus has already been adjusted and is operating at a substantially predetermined flow velocity of the reaction medium into the reaction and transport device.

In the present system, it is also possible to exchange the reaction media, where then polymer solution A contains a poly-cationic component and polymer solution B contains a poly-anionic component.

Following the predetermined reaction time period, the beads or the capsules formed by the reaction of the first and second components, are separated from the reaction medium. This takes place for example in that the reaction medium is mixed with a corresponding dilution solution (diluent), which for example can be isotonic sodium chloride solution, phosphate buffered saline (PBS) or a cell culture medium subsequently separated at least partially from this medium. If the dilution or separation of the medium takes place continuously or in repeated steps, a predetermined separation of the capsules from the original reaction medium can take place over a predetermined time period. It will also be understood according to the present invention that alternatively the capsules at first are only partially separated from the reaction medium before they are washed with a corresponding dilution solution, diluted or stored in this solution.

In a further preferred embodiment of the present apparatus, the reaction and transport device comprises a plurality of so-called collectors in the receiving region for the beads, which according to a further preferred embodiment is configured at least partially in funnel-like manner. These collectors according to the invention are passed by a pre-determined amount of a reaction medium and receive the beads formed in the region between the nozzle outlet and the collector in the reaction medium.

According to a further particularly preferred embodiment of the present apparatus, a substantially tube-shaped transport section follows the collector section in which the beads are transported in the reaction medium preferably in substantially homogeneously distributed manner.

The tube-shaped transport section according to a particularly preferred embodiment at least partially comprises a spiral-shaped section, where the spiral axis of this section is arranged preferably substantially orthogonal to the gravitational field.

With this arrangement of the tube-shaped transport section, a more homogeneous distribution of the beads or microcapsules within the reaction medium is made possible.

In addition, to alter the transport velocity of the capsules in the reaction medium, the present invention also provides the dimensions of the tube cross-section to be variable along the transport path. As is well known, the flow velocity at a constant flow rate decreases with increasing cross-section or vice-versa increases with reduced cross-section. For example, the tube or flow diameter of the transport path or the reaction medium with the capsules can lie within the range of 0.5 mm to 15 mm, preferably 1.0 mm to 10 mm and more preferably 4.5 to 6.5 mm or 1.0 to 4.5 mm.

The object of the present invention is achieved through a method for producing microcapsules, where the method comprises at least the following steps. According to the present invention, a substantially constant, pulsating volumetric flow is provided for forming the liquid drops or beads, which according to the present invention passes through a liquid reservoir having a liquid inlet and a liquid outlet and culminates in a nozzle outlet. Furthermore, a variable electric field is generated at least in the region between the nozzle outlet and the reaction and transport device, where the electric field is changeable with a movable electrode, which is movable substantially parallel to the nozzle axis by means of a drive. The beads formed at the outlet of the nozzle are received in the transport and reaction medium and passed along a pre-determined flow path for forming an outer membrane on or in the beads by reaction between at least one first component in the bead liquid and at least one second component in the reaction medium. After a predetermined reaction time period, which for example is determined substantially by the flow velocity for a constant flow path, the beads or formed capsules are separated from the reaction medium, and preferably stored in a suitable medium.

The separation according to the present invention takes place either in stepwise manner or continuously, where the reaction medium is at least partially removed from the beads or the formed capsules and then subsequently washed with a dilution solution or diluted.

According to a preferred embodiment of the present method, the shape or size of the beads are determined substantially by controlling and/or regulating process parameters, which are selected from the group consisting of oscillation frequency, oscillation amplitude, volumetric flow rate of the liquids and/or the strength of the electric field or the distance between the nozzle outlet and the receptor in the reaction medium, combinations hereof and the like.

The method according to another embodiment is characterized in that the reception of the drops from the nozzle outlet takes place in a collecting tray of the reaction and transport device, which is passed by a pre-determined volumetric flow of the reaction medium.

According to a further preferred embodiment of the invention, the passage capability for the reaction medium through the collecting tray of the reaction and transport device is determined by sensors, where in a particularly preferred embodiment, when passage capability is lacking e.g. due to plugging of a pathway, changeover can be made during operation to at least one other collecting tray of the transport and reaction device or the respective pathway is shutdown if working in a parallel mode where all collecting trays are in use.

This can take place in that a plurality of collecting trays are arranged at least partially within a rotatable disc and when passage is not possible, exchange is made to the corresponding next collecting tray.

The reaction time period between the first and second components for forming microcapsules is determined substantially by the retention time of the microcapsules in the reaction medium according to the present invention, where the retention time is controlled and/or regulated by the length of transport path and the flow velocity of the reaction medium for a given geometry of the transport line.

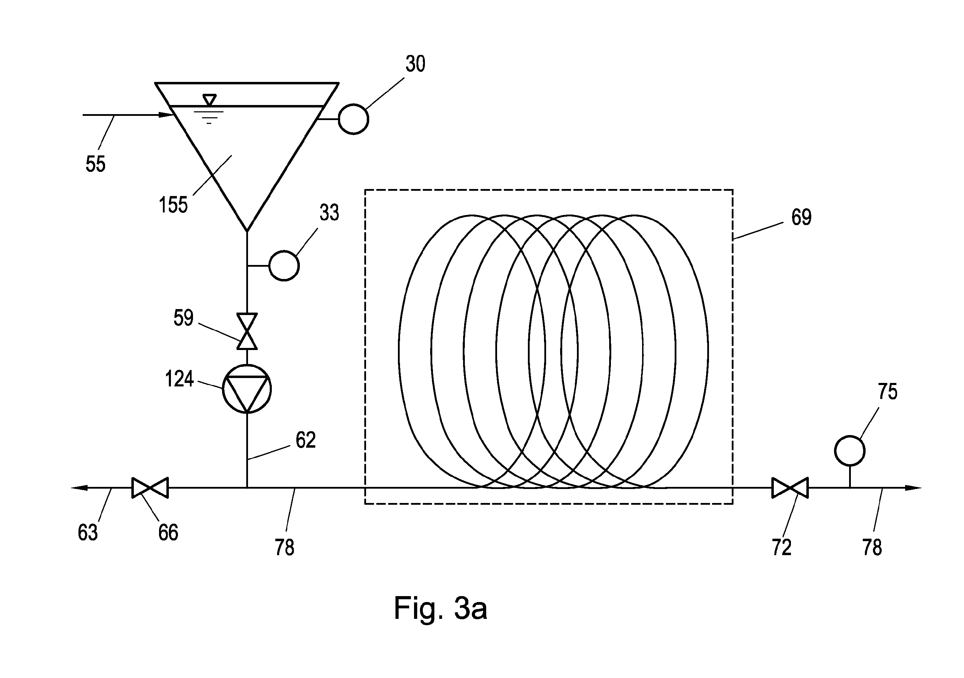

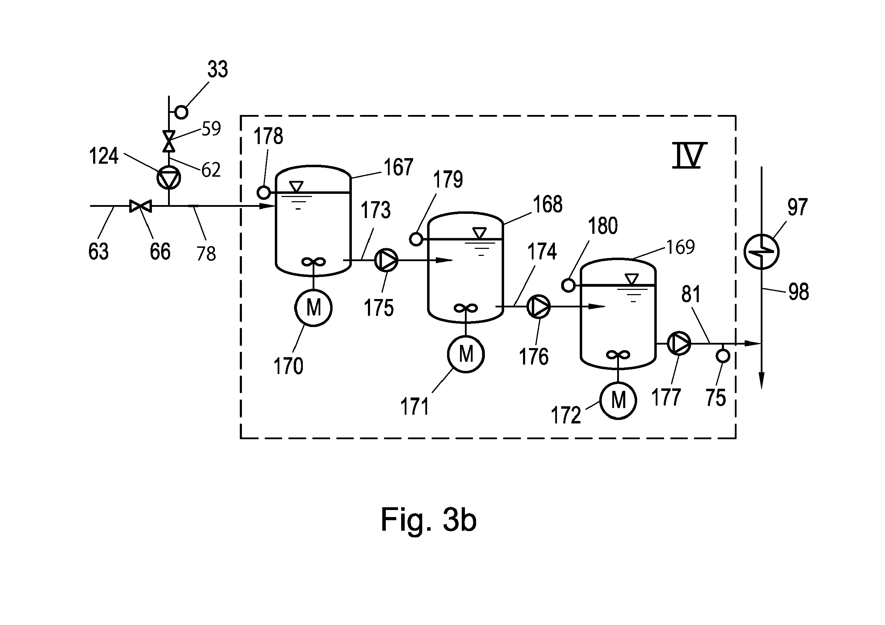

Conduit pipe or other fluid transport systems, which allow a continuous and homogeneous transport of the microcapsules, are known in the prior art. Preferably a transport system as shown in Fig. 3a is employed. Alternatively, however, other systems such as a stirring device shown in Fig. 3b can be used. According to the present invention, several similar systems can be connected in series or combinations of various systems can be formed.

Following the transport path, the formed microcapsules can be collected in a so-called washing vessel (washing flask, washing bottle) according to a preferred embodiment of the present method. In the vessel, the microcapsules are removed continuously from the reaction medium or in a stepwise manner or combinations thereof. The capsule separation from the reaction medium takes place by exchanging or diluting with a reaction-neutral solution, for example an isoosmotic solution, a physiological sodium chloride solution, PBS solution and/or a cell culture medium.

According to a further preferred embodiment of the present method, the method is carried out with at least one apparatus as described above. It will also be understood according to the present invention that the above described apparatus is used to produce uncontaminated, aseptic microcapsules which are free of any external germs and pollutions.

The invention further includes a method for controlling an apparatus for producing microcapsules as described above. In a first step, the method comprises the supply of a liquid with at least one first component in a bead generator, with which individual beads are formed from a liquid stream or jet. These beads are received in a further liquid with a second component for forming microcapsules, whereby the apparatus, components or groups of components and the process parameters of the apparatus are controlled and/or regulated depending on at least one parameter relating to the properties of the microcapsules.

In the following, the invention is described in conjunction with a particularly preferred embodiment, where it is expressly remarked that alternatives or modifications of this apparatus also belong to the present invention and the inventive teaching is not limited by these embodiments.
- Fig. 1: shows a schematic illustration of the apparatus of the present invention for producing microcapsules;
- Fig. 2: shows a sectional illustration of a bead generator according to the present invention;
- Figs. 3a & 3b: show a schematic illustration each of a preferred embodiment of a transport and reaction device;
- Fig. 4: shows a schematic illustration of a collecting tray for the formed microcapsules;
- Fig. 5a: shows a schematic sectional side view of an apparatus for producing microcapsules;
- Fig. 5b: shows a plan view of the movable electrodes of the apparatus of Fig. 5a;
- Fig. 5c: shows a plan view of the collector configuration of the reaction and transport device of the apparatus of Fig. 5a;
- Fig. 6: shows a schematic illustration of the fluid flows for the operation of the apparatus for producing microcapsules of Fig. 5a;
- Fig. 7a: shows a schematic illustration of an electrode configuration with one electrode adjustable in axial direction and a bypass disc for the operation of the apparatus for producing microcapsules of Fig. 5a;
- Fig. 7b: shows a schematic illustration of an electrode unit with one electrode adjustable independently in axial direction and a central bypass disc for the parallel operation of the oscillation units of the apparatus for producing microcapsules of Fig. 5a;
- Fig. 8: shows an exploded schematic illustration of an apparatus for producing microcapsules;
- Fig. 9: shows a schematic diagram for illustrating the effect of the distance of the movable electrode and the flow velocity on the shape of the microcapsules.

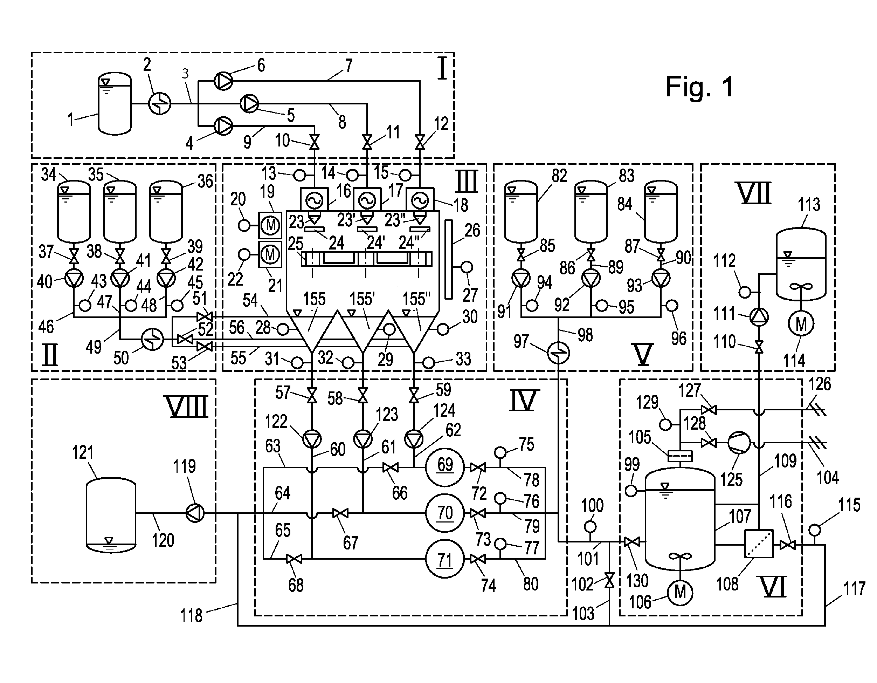

Fig. 1 shows a schematic diagram of the present apparatus for producing microcapsules with three redundant encapsulation paths, which can be operated in parallel to improve productivity or preferably one after another to improve the process reliability.

The apparatus according to the present invention can be subdivided into 7 functional units, which are in the following marked and numbered with Roman numerals.

The unit I is for continuous supply and temperature adjustment of the polymer solution A, the unit II for continuous supply, mixing and temperature adjustment of polymer solution B, unit III for continuous generation and dispersion of beads of polymer A and for collecting the beads in the collector funnel, unit IV for transportation, a first analysis and for hardening the microcapsules, unit V for continuous supply, temperature adjustment and mixing of washing solutions for the downstream process, unit VI for continuous separation, enrichment and further downstream processing of the microcapsules and unit VII for collecting of the finally processed capsules.

Fig. 1 shows an example of the encapsulation process with three encapsulating units. It would also be possible to provide an analogous process with only one encapsulating unit or N encapsulating units, where N is a natural number.

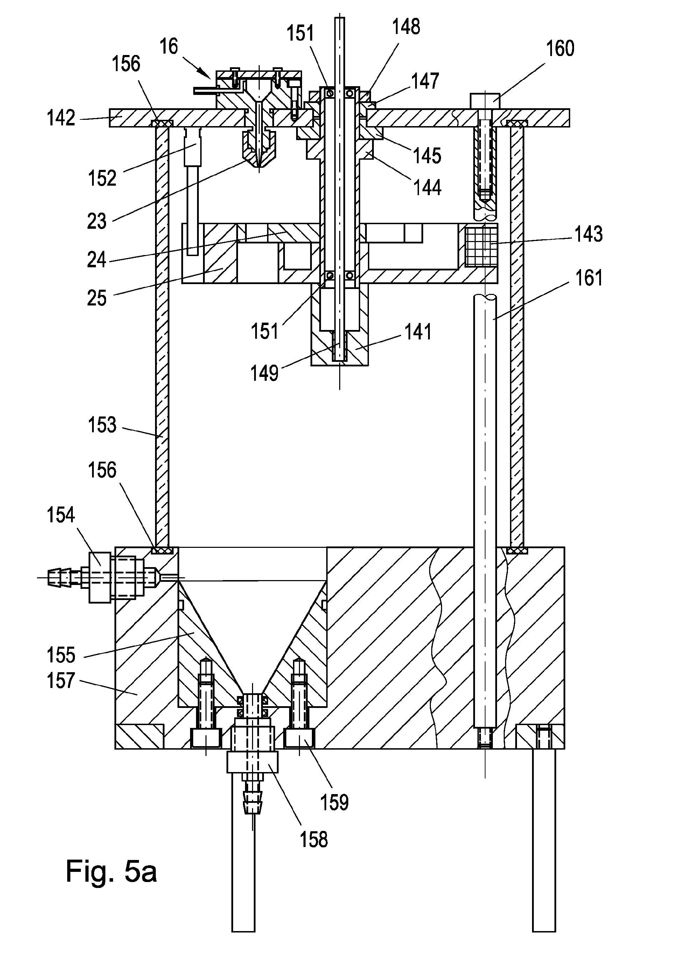

To start the process, the collector funnels 155, 155' and/or 155" (shown in detail in Fig. 5a) of the reaction and transport device are filled one after the other with polymer solution B. For this, the solution is removed from the supply containers 34, 35 and 36 by means of the pumps 40, 41 and 42 via the lines 46, 47 and 48 through the open valves 37, 38 and 39 to a central line 49, where the solutions are temperature-controlled in a heat exchanger 50. The supply containers preferably can contain different components, so that the final polymer solution B is then present in the central line 49. The line 49 is separated into the funnel supply lines 54, 55 and 56, which are separately regulated by the valves 51, 52 and 53. The sensors 43, 44 and 45 detect the relevant measuring data of the polymer solution B for process control.

Polymer solution A present in container 1 passes through the central line 3, where the liquid can be temperature-regulated by the heat exchanger 2. It is then directed by the controllable valves 10, 11 and 12 together with the pumps 4, 5 and 6 through the bead generator supply lines 7, 8 and 9 to the respective bead generators. The sensors 13, 14 and 15 determine the parameters of polymer solution A for process control.

The reference signs 16, 17 and 18 refer to the bead generators, which receive the polymer solution A and subsequently pass the polymer solution A via the nozzles 23, 23' and 23" out of the bead generators 16, 17 and 18. The bead generators serve as a device for producing ideally spherical drops of uniform size from a laminar liquidjet of the polymer solution A. This is achieved by transmitting a mechanical oscillation onto the flowing liquid, which is explained in detail below.

A stroboscope 26 can be provided for visual control, whose blinking frequency is detected by a sensor 27, which can be coupled to the frequency of the bead generator to make the produced beads and the uniformity of bead generation visually observable.

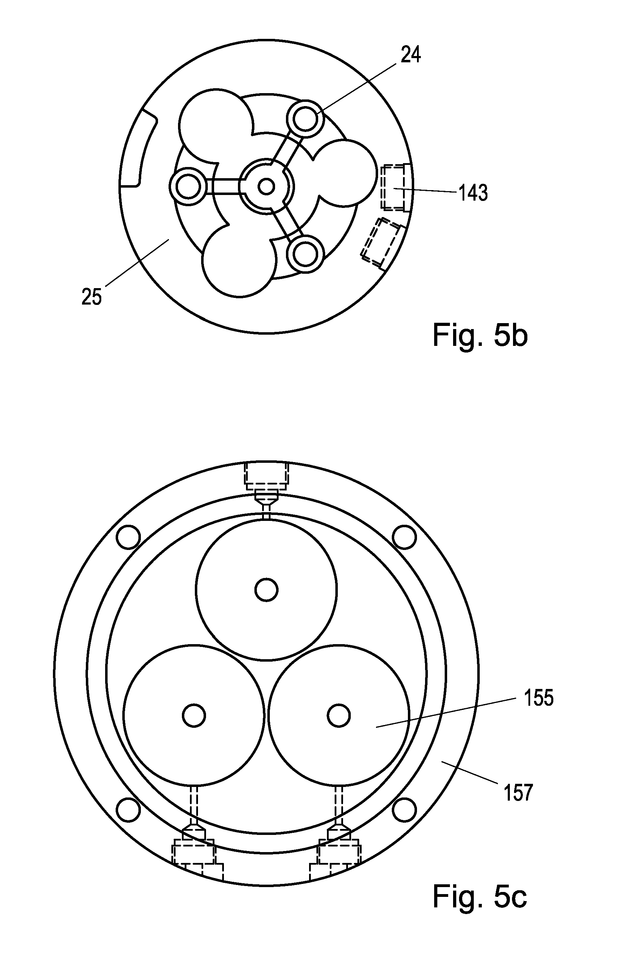

Ring electrodes 24, 24' and/or 24" (see Fig. 5c) are arranged between the nozzle outlet of the nozzles 23, 23' and/or 23" and the associated collector funnels 155, 155' and/or 155", collectively or alternatively referred to as the collector funnel 155 of the reaction and transport device. Leaving the nozzle 23 the liquid passes through the electrodes. The ring electrodes 24, 24', 24" are charged with a voltage and generate an electric field, in particular between the nozzle outlet and the electrodes, which causes an electrical charging and subsequently dispersion of the beads formed at the outlet of the nozzles 23, 23' and 23".

The apparatus as shown in Fig. 1 additionally comprises a bypass disc 25 driven by a motor 21 between the nozzle outlet 23 and the collector funnel 155 of the reaction and transport device, which can be pivoted about an axis 144 (see Fig. 5a) into the path of the liquid between the group of nozzle outlets 23 and the group of collector funnels 155 (see Fig. 3a). The position of the bypass disc is determined by a sensor 22.

The bypass disc 25 is provided in view of the jet and bead generation at the beginning of the microcapsule production process and in view of the necessity to adjust the apparatus especially with respect to the flow volume, oscillation intensity and oscillation frequency as well as the electric field. Beads generated during the adjustment process should not enter the reaction and transport device, and therefore beads of incorrect size and shape can be removed by using the bypass disc 25 from the production process.

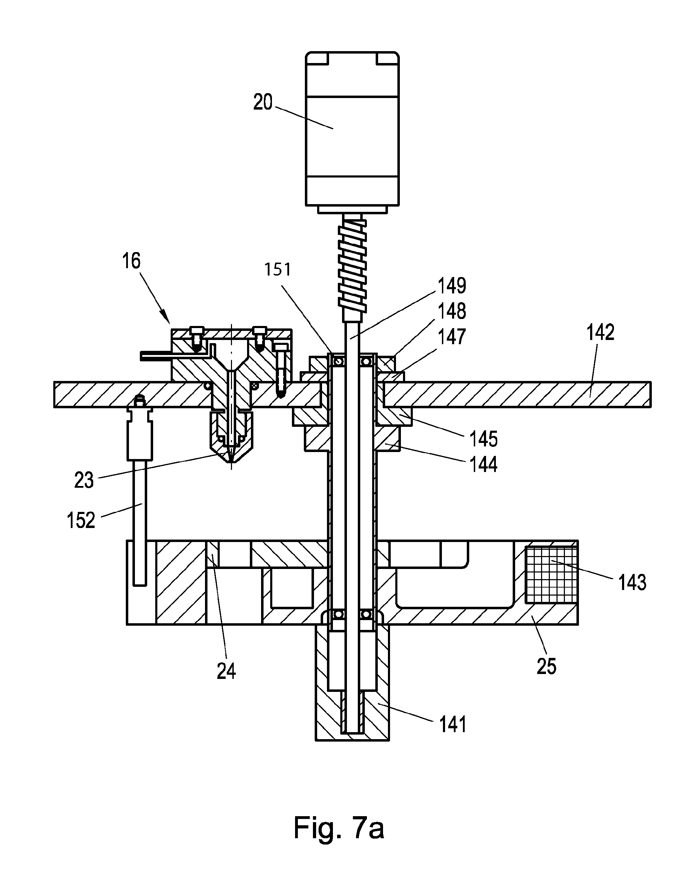

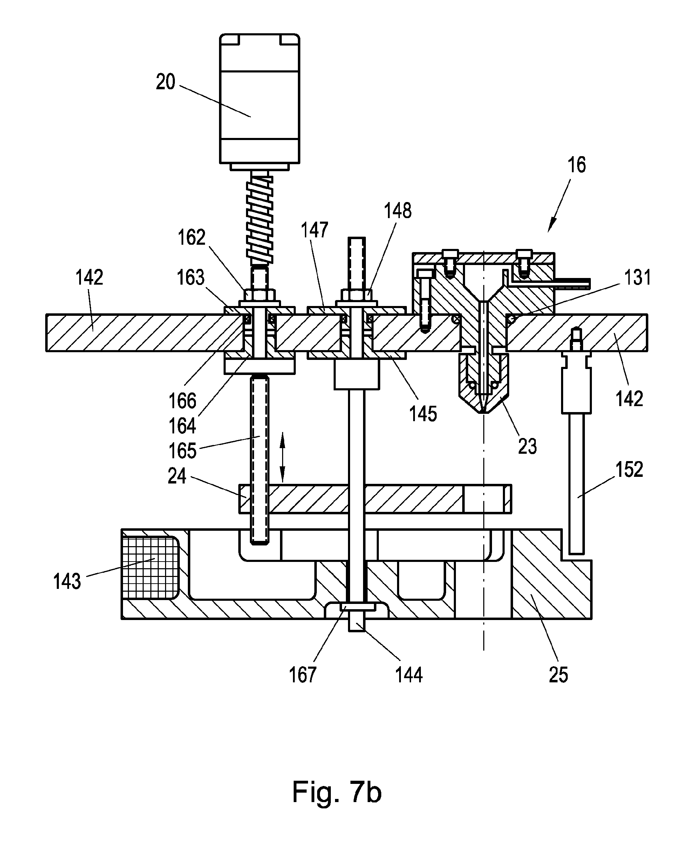

The ring electrode 24, 24' and 24" shown in Fig. 1 is arranged to be adjustable in height (see detail drawings of Fig. 7a and 7b) through a controllable motor drive 19, so that a sufficient charging of the liquid stream (jet) in the region of bead formation as well as the applied electric potentialcan be ensured. Due to the repulsion of the charged beads, which is responsible for the desired dispersion effect, the beads are widely distributed from each other when arriving at the reaction medium located in the collector funnels155, 155', 155" of the transport and reaction device. The transport and reaction device is passed by the reaction medium in such a manner that the beads are completely immersed in the reaction medium and are directed to the outlet of collector funnel located at the bottom of the funnel due to the preferably funnel-shaped configuration of the collecting device 155, 155', 155" (Fig. 5b). The filling level in the collector funnels 155, 155', 155" is detected by the sensors 28, 29 and 30. The continuous discharge of the solutions is regulated by the outlet vales 57, 58 and/or 59, the pumps 122, 123 and/or 124 and the sensors 31, 32 or 33. The supply of the reaction medium (polymer solution B) takes place via the lines 54, 55 and/or 56.

The predetermined reaction time period results from the flow velocity of the capsules and the length of the reaction paths 60, 61 or 62, which for example runs between the outlet of the collection funnel 155 and the position where a dilution medium is added (joining position of the lines 98 and 81 in the main unit IV). During the reaction time period, polymers A and B form complexes with one another and form a solid shell on the bead surface. The bead is thenceforward representing an initial microcapsule.

The processed microcapsules are analyzed by a sensor 100 and removed through the discard line 103 by opening the valve 102 until all of the detected parameters correspond to the desired values. When the desired measured values are achieved, the valve 102 closes and at the same time inlet valve 122 opens, so that the microcapsules flow into the washing container 107 and the downstream process begins.

The microcapsules are preferably further diluted in a reaction-neutral solution and transferred via the line 101, during capsule production, continuously into the container 107, in which the microcapsules can be at least partially separated from the reaction/dilution mixture over the outlet 117 and the corresponding filter 108. The separated reaction and dilution medium mixture flows over the outlet 117 and the discard line 118 into the central discard line 120, where it is pumped by means of the pump 119 directly into the discard container 121.

A preferably motor-driven stirring device 106 is provided in the container 107 to ensure a sufficient mixing in the container 107. For further downstream washing and/or process steps, after successful capsule production, further solutions can be added through the supply line 101, for example a physiological sodium chloride solution, PBS or a cell culture medium. These can be supplied simultaneously or in a time sequence by means of the pumps 91, 92 and 93 from the tanks 82, 83 and 84 when the valves are open in the lines 88, 89 and 90. These are pumped through the central wash line 98 into supply line 101. The temperature might get adjusted by the heat exchanger 97.

The removal of the media preferably takes place in several steps through the filter 108, so that a pre-determined separation level of the capsules with the corresponding solution from the original reaction medium can be achieved.

The filling level in the container 107 is detected by the sensor 99. The container pressure is determined by the sensor 129. Compressed air is introduced, after passing the valve 128 and the sterile filter 105, through the compressed air line 104. This takes place when the discharge valve 127 is closed. In order to reduce the liquid level in container 107 through the outlet 117 the discharge valve 116 is opened. Increasing the filling level is possible by closing the inlet valve 128 and simultaneously opening the discharge valve 127, where air flows out of the container 107 over the line 126, so that the pressure in the container 107 sinks and more liquid can flow in then flow out. Increasing the filling level can take place both when the discharge valve 116 is open and when it is closed.

After completion of capsule formation and when achieving the desired degree of microcapsule separation from the reaction medium, the final microcapsules, which are contained in a neutral solution with respect to complex formation, can be removed. For example, after opening the product removal valve 110, they can be pumped by a pump 111, or by pressure increase in container 107, when the valve 116 is closed, transported through the product discharge line 109 out of the container 107 into the product container 113 thereby passing sensor 112 for analyzing of the final microcapsules. If desired the microcapsules can be agitated in the container 113 by stirring element 114.

To achieve a continuous monitoring or controlling of the production process, the present invention preferably provides the sensors 31, 32, 33, 75, 76, 77, 100 and 112, which conjointly or independently detect properties / measuring values of the formed capsules. This can take place for example optically, where the shape, size, turbidity and density of the microcapsules from the production process can be regulated or controlled depending on the measured properties. Furthermore, the sensors 13, 14, 15, 43, 44, 45, 31, 32, 33, 75, 76, 77, 94, 95, 96, 100, 112 and 115 for detecting the fluid flow, sensors 28, 29, 30 and 99 for detecting the liquid levels in the collector funnels 155, 155' and 155" and the washing container 107, sensors 13, 14, 15, 31, 32, 33, 75, 76, 77, 99, 100 and 112 for detecting the fluid temperature, sensors 13, 14, 15 and 129 for detecting the pressure within the vibration units 16, 17 and 18, as well as the pressure in the washing container 107, sensors for determining the stroboscope frequency and for detecting the positions of the ring electrodes 24 and the bypass disc 25 are provided. The information collected by the sensors are transmitted for example to a controller or regulator device, which in turn influences the potential difference for generating the electric field, the type and the temperature of the fluids, the concentration of the chemicals for the complex reaction and the washing process, the volume flow or the flow velocity and/or the like by means of a corresponding control program or pre-determined algorithm. In this manner, the production process is regulated.

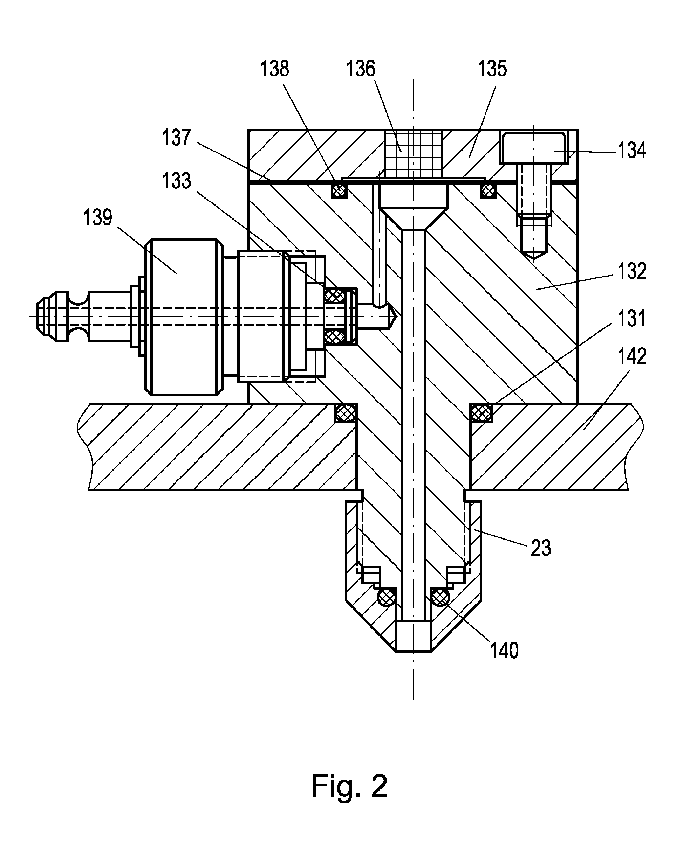

Fig. 2 shows one of the bead generators 16, 17 or 18 in partial cross-section in side view, where apart from the inlet, the outlet 23 for the liquid is also shown schematically. The liquid is introduced from a bead generator supply line (not shown) over the connector cone 139 into the oscillator chamber, in which oscillations are mechanically transmitted to the flowing liquid by means of the membrane 137, which is activated by a corresponding frequency generator to cause vibration. In this embodiment, the liquid flows downwardly out of the bead generator and leaves the bead generator through the opening in the nozzle 23.

In this embodiment, a membrane 137 is arranged together with a permanent magnet 136 at the upper end of the bead generator, which is pressed by screws 134 against the oscillation chamber 132 by means of the oscillator chamber cover 135. The sealing between the oscillation chamber 132 and the membrane 137 is provided by the sealing ring 138. The permanent magnet 136 is arranged on the upper side of the membrane in the direction of the frequency generator, which serves together with the membrane 137 for transmitting and introducing the oscillations formed in the frequency generator into the liquid. The sealing between the oscillation chamber 132 and the connector cone 139 is provided by the sealing ring 133. The sealing of the nozzle 23 is provided by a sealing ring 140. The sealing of the cover plate 142 of the reaction and transport device is provided by the sealing ring 131.

Fig. 3a shows a particularly preferred embodiment of the reaction and transport device. After the produced beads come together with the polymer solution B in the collector funnel 155, they are passed through a line 62 into a line 78, which preferably is at least partially of spiral shape 69, in order to ensure a homogeneous distribution of the microcapsules in the reaction medium and to prevent or reduce sedimentation of the microcapsules in the transport line. The supply of the reaction medium (polymer solution B) takes place over the transport line 55. The sensor 30 monitors the filling level of the funnel 155. The pump 124 whose supply can be closed by the valve 59, is used to pump the suspension of microcapsules and reaction medium through the tube reactor, when the valve 66 is closed or in the discard line 63 when the valve 66 is open and the valve 72 is closed at the same time. With the group of sensors 33 it can be determined whether the formed microcapsules correspond to the specifications or in case of deviations it can be regulated, whether the microcapsules are to be further processed over the reaction line 78, or are to be removed through the discard line 63. The sensor group 33 on the supply line to the capsule reactor and the sensor group 75 at the capsule reaction line 78 serve to detect the relevant process data, for example temperature, flow rate and/or pressure in the lines, the capsule size, the capsule shape and/or capsule density.

Fig. 3b shows an alternative embodiment of the reaction and transport device in the form of a cascade of stirring vessels with at least one stirred container. In the variation exemplarily shown here, a cascade of three stirred vessels is present. In the scheme only one of the supply pipes is shown. It is self-evident that the produced beads can be supplied by one or more of the other supply pipes as well.

After the produced beads come together with the polymer solution B in the collector funnel 155", these are transferred, when the valve 59 is open, by the pump 124 through line 62 either into the discard line 63 or when the values from the sensor 33 correspond to the desired values, introduced into the line 78 which leads to the first of the stirred reaction containers 167. The filling level of this container can be regulated and is detected by the sensor 178. The reaction container 167 is stirred by the stirring element 170 to ensure a homogeneous distribution of the microcapsules and a defined retention time and also to prevent sedimentation of the microcapsules in the reaction container 167. The discharge of the microcapsules-containing reaction medium suspension takes place over the transport line 173 and is controlled by the pump 175. Analogous to the reaction container 167, the two reaction containers 168 and 169 are also provided with stirring devices 171 and 172, sensors 179 and 180, outlets 174 and 81 as well as pumps 176 and 177. This arrangement ensures that different filling levels are possible in the containers. After this processing, the reaction is strongly slowed down or stopped by dilution of the reaction mixture with washing fluid from the line 98, which has been temperature adjusted by the heat exchanger 97. The sensor group 75 detects the relevant parameters of the process, especially the quality of the microcapsules(see Fig. 3a).

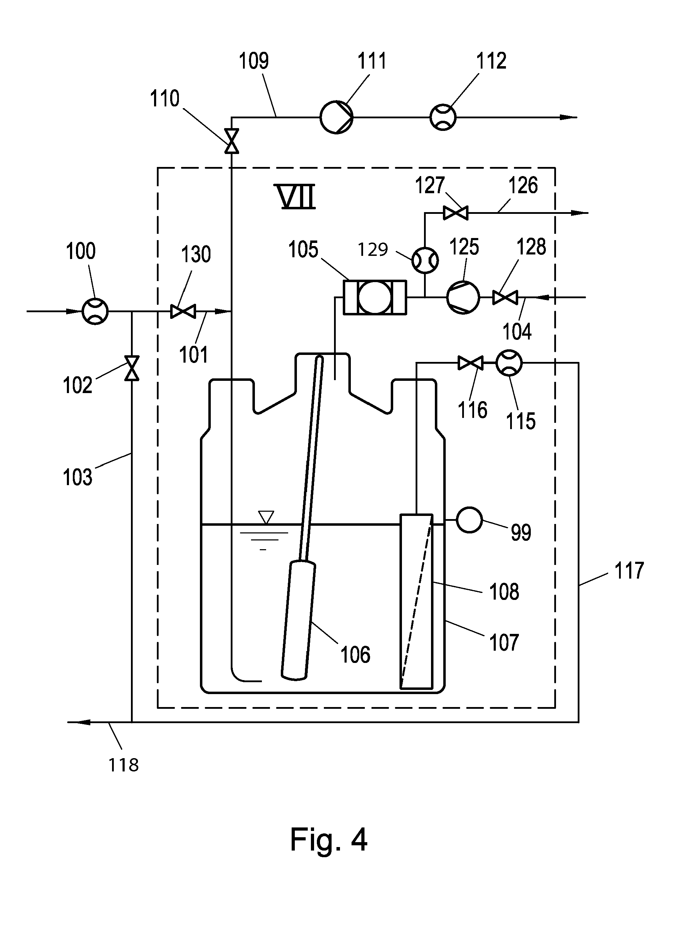

Fig. 4 shows a collecting vessel (washing container) 107, which in this present embodiment is shown as a stirred washing bottle. Alternatively, as is also shown in Fig. 1, a stirred vessel system can be used. Valves 130 and 102 can be used to stop further feed into the washing vessel. In response to the measurement results of sensor group 100 either valves 130 for transfer of microcapsules having the desired parameters into collecting vessel 107 or valve 102 for discharge of microcapsules not having the desired specifications via waste line 103.can be opened.

In addition, it can be important to regulate the filling level of the washing vessel in order to achieve optimal separation by the filter 108 or to achieve an ideal washing result and/or a downstream processing of the formed microcapsules. For this purpose, the washing vessel has a compressed air supply line 104 and an air decompression line 126.

The fluid level in the container 107 is detected by the sensor 99. The container pressure is determined by the sensor 129. A compressor 125 supplies the line 104 with compressed air, which passes through the valve 128 and subsequently the sterile filter 105, when the air discharge valve 127 is closed. When the liquid discharge valve 116 is open, the increased pressure in the container 107 reduces the fluid level whereby the fluid is reduced through the outlet line 117. Increasing the fluid level is achieved by closing the inlet valve 128 at the same time opening the discharge valve 127, where air flows out of the container via the line 126 and consequently the pressure in the chamber 107 reduces. The increase in the fluid level can take place when the discharge valve 116 is open or closed.

The washing container 107 itself comprises a stirring device 106, which for example in combination with a magnetic drive outside of the vessel provides a continuous mixing of the microcapsules in the vessel with the corresponding solution, where sedimentation of the microcapsules is avoided.

In order to continuously separate the reaction medium or dilution medium from the microcapsules, the container 107 includes a separation device, which allows discharge of the preferably liquid components from the vessel 107 by means of the filter 108 over the line 117 and then into the discard container 121 through the lines 118 and 120 shown in Fig. 1. The effluent can be analyzed by means of sensor group 115 and if necessary, the volume flow rate of the effluent can be regulated by the pump 119 (see Fig. 1).

The outlet line 117 includes a valve 116 to prevent backflow of the medium after shutting off the pump 119 (shown in Fig. 1). Alternatively, the container 107 can be supplied with a dilution solution over the line 117 and the filter 108. The solution or components of the solution is stored in the containers 82, 83 and/or 84 and supplied through the pumps 91, 92 or 93 in order to backwash the filter 108.

According to a preferred embodiment of the present invention, the microcapsules are again washed with the dilution solution after completing the microcapsule production, whereas the excessive and/or used dilution solution is then disposed-off into the discard container 121 via the lines 117, 118 and 120 by the pump 119 or by increasing the pressure in the container 107. With this, it is ensured that the complex-forming reaction (complexation) is stopped or significantly slowed and the microcapsules are removed from the reaction medium continuously or in batch-wise manner. After sufficient removal of the reaction medium, the remaining microcapsules in the dilution medium within the container 107 can finally be removed by means of the pump 111 or by increasing the pressure in the container 107, via the line 109 when the valves 130 and 116 are closed, The quality of the capsules can be analyzed by means of sensor group 112.

Fig. 5a shows a schematic illustration of a capsule reactor by which three independent bead generators 16, 17 and 18 can be used independently or in combination for sterile microcapsule production (generators 17 and 18 are not shown in the figure).

The bead generators 16, 17 and 18 are arranged in circular manner about a central axis 144 which is isolated from the reactor cover plate by insulators 145 and 147 (see Fig. 7a) and fixed by the nut 148 screwed onto the electrode axis 144 against the reactor cover plate 142, which centrally sits on a glass cylinder 153 which is sealed by the upper glass cylinder sealing ring 156. The glass cylinder 153 in turn sits centrally on a lower glass cylinder sealing ring 156 and the reactor ground plate 157. The reactor ground plate 157, the glass cylinder 153, the glass cylinder sealing rings 156 and the reactor cover plate are pressed together by four symmetrical clamping rods 161 with clamping screws 160 to achieve a tight and sterile sealing.

According to this preferred embodiment, it is possible to maintain the production process by switching for example from bead generator 16 to bead generator 17, where the switching process preferably takes place by closing the valve 10, stopping the pump 4 and simultaneously rotating the bypass disc 25 with the electrode 24 into the bypass position. The bead generation in the bead generator 17 then takes place by starting the pump 5 when the valves 10, 11 and 12 are still closed. The valve 11 is opened first when the sensor 14 has detected the optimal pressure in the supply line 8, wherein the polymer solution A then initially flows at an increased flow rate through the bead generator 17. The produced beads then leave the nozzle 23' and are collected by the bypass disc, which remains in bypass position, until all process parameters have reached their desired values. The production of microcapsules starts when the bypass disc 25 is pivoted to the passage position, and the beads produced from polymer solution A are then submersed in the polymer solution B in the collector funnel 155' and the production process continues.

For such switching, the apparatus comprises a bypass disc rotatable about the electrode axis 144, preferably made of FDA USP class IV conform synthetic material. A three-armed electrode 24 is located within the bypass disc, which comprises 3 corresponding ring electrodes (see also Fig. 5b). The bypass pivot disc is pivotally mounted on the axis 144 and can be moved between a position "bypass" (position 1) and a position "pass through" (position 2), which are exactly defined by the bypass stop 152 and the geometry of the bypass pivot disc. One or more radially arranged permanent magnets 143 are arranged in the bypass pivot disc 25 for sterile force transmission to the disc 25, where these respond to a magnetic field outside of the capsule reactor with a pivotal movement. The magnetic field is generated for example by a magnetic plate movable parallel to the magnets 143. In addition, bypass pivot disc 25 can move together axially with the electrodes through a motor-driven adjusting axis 149 and the associated bypass disc mounting 141. The adjusting axis 149 is guided by the adjusting axis pivot bearings 151.

The polymer solution A then flows in the first position shown in Fig. 5a through the bead generator 16 and the nozzle 23. After the nozzle outlet it is distributed as beads along the path to the transport and reaction device. A charge displacement in the liquid beam is induced by the electric field generated by the adjustable ring electrodes 24 and their electric potential, whereby the generated beads are electrically charged when passing through the ring electrodes. These beads are collected by the collector funnel 155, which is filled with the polymer solution B. The collector funnel is located centrally to the fall direction of non-deflected beads eluting from the nozzle outlet 23.The beads are subsequently immersed in the reaction medium and transported through the collector funnel outlet 158 and the corresponding line 60 while reacting. The supply of reaction medium (polymer solution B) to the collector funnel 155 takes place for example via the supply line 54 and the collector funnel inlet 154.

The ground plate of the capsule reactor is indicated with reference sign 157, in which three collector funnels 155, 155', 155" are fixed with two screws 159, where in the present side view, only one collector funnel 155 is shown. Each collector funnel 155, 155', 155" is associated with a corresponding bead generator 16, 17 or 18, each having a nozzle 23, 23', 23". These second and third nozzles and also the second and third collector funnels 155' and 155" as well as the second and third ring electrodes are not shown in the side view of Fig. 5a, but result for the skilled person as a logical consequence of the two illustrations of Figs. 5b and 5c.

Fig. 5b shows the -multi-electrode 24, which is placed into a bypass pivot disc 25, which is preferably conform to FDA USP Class VI. The electrode comprises three ring electrode sections. The bypass pivot disc 25 comprises three passage openings and a collector container which collects the initial and final output of the corresponding nozzles in the bypass position, for example when starting the bead generator or when changing between the individual nozzles. Each of the nozzles is associated with a collector funnel 155, 155', 155" corresponding to Fig. 5c, whereas in an alternative embodiment of the present invention additional overflow regions can be provided. For the case that an individual collection section or the following reaction and transport section is congested, additional overflow regions can prevent an overflow of the system. The collection sections are connected to the respective collection sections 155 e.g. by means of connecting channels.

Also according to the present invention, especially in the overflow regions, sensors 28, 29, 30 (Fig. 1) are provided which control the liquid level in the funnels and which at least give a corresponding notice to the operating personnel or preferably allow an automatic switching or changing of the nozzles. The beads collected in the collection section 155, 155', 155" are received in the reaction medium (polymer solution B) introduced by the supply lines 54, 55 and 56 and the funnel inlets 154, 154' or 154". The beads are then transferred at the bottom into the respective funnel outlet lines 60, 61 and 62 from the funnel outlets 158, 158' or 158".

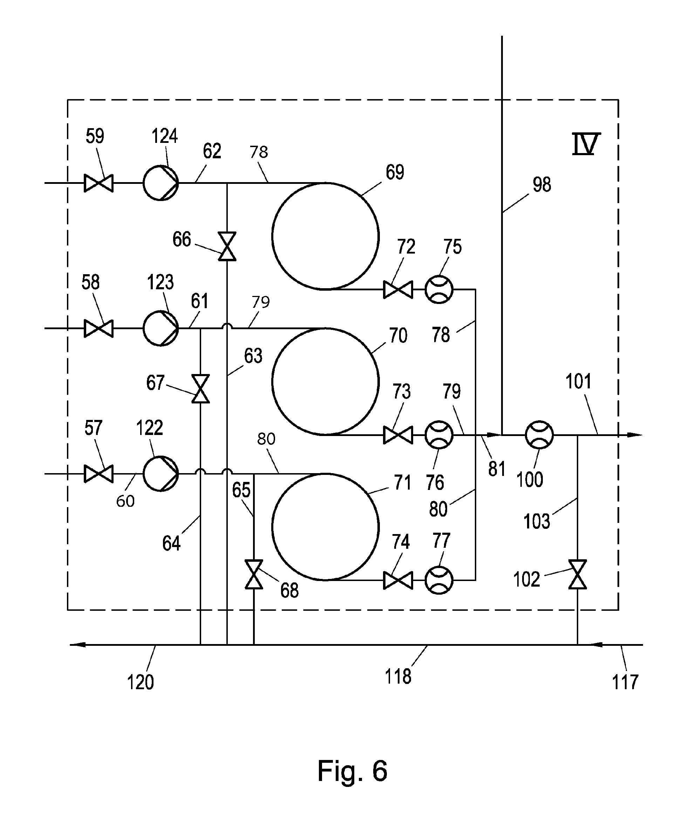

Fig. 6 shows the functional unit IV for transport to the first analysis and hardening stage of the microcapsules. The reference signs 69, 70 and 71 refer to three tube reactors, which are supplied by the supply lines 60, 61 and 62 with the corresponding reaction medium by means of the valves 57, 58 and 59 together with the pumps 122, 123 and 124. The supply lines include controllable valves 57, 58 and 59 through which the supply of the reaction medium, when operation is stopped, can be cut off. In addition, it is possible to circumvent the tube reactors through the discard lines 63, 64 and 65, controlled by the valves 66, 67 and 68, until the microcapsules correspond to the desired parameters.

The microcapsules suspended in the reaction medium coming from lines 78, 79, 80, which are merged to central line 81 are mixed in the line 101 with a washing solution provided by line 98. The washing solution is for example a physiological sodium chloride solution, a buffer solution or a cell culture medium. In line 101 the complex-formation reaction is ideally stopped or greatly slowed. In the embodiment shown here, this washing or dilution solution is passed through the central washing fluid line 98 for all three branches, where the valves 85, 86 and 87 and the pumps 94, 95 and 96 are used to control or regulate the corresponding dilution solutions.

In order to determine the volumetric flow rate or the flow velocity of the media and the microcapsules in the tube reactors 69, 70 and 71, corresponding sensors 75, 76 and 77 are arranged in the lines 78, 79 and 80, which provide measurement data for controlling or regulating the apparatus. These signals are preferably collected in a process controller, evaluated and employed in a given algorithm, in particular for controlling and regulating the volumetric flow rate in respect of the production process in the corresponding lines.

After successful dilution, the processed microcapsules are analyzed by the sensor 100. By opening the valve 102, the discard lines 103, 118 and 120 leading to the discard container 121 are used until the microcapsules correspond to the desired values. When the desired values are achieved, the corresponding diluted reaction medium with the suspended microcapsules are transferred by the supply line 101 to the stirred washing container 107 and therefore provided to the downstream processing.

According to the embodiment in Fig. 6, it is possible to independently process microcapsules formed in bead generators 16, 17 and 18 working independently. This allows a changeover to alternative paths for a production of capsules when difficulties within an individual process section arise.

With the present apparatus, it is possible to substantially continuously produce large amounts of microcapsules and to reduce the known drawbacks of the prior art when using a single bead generator with a corresponding reaction and transport device.

Fig. 7a shows a schematic illustration of an electrode configuration with a central electrode 24, adjustable in axial direction, and a bypass disc 25 for preferably operating a single bead generator 16, 17 and/or 18, where only one generator is shown in partial side view. The introduced liquid is mechanically oscillated in the oscillation chamber of the generator and according to the embodiment here first flows as a stream out of the bead generator 16 from the outlet of the nozzle 23 and then breaks up into beads.

The bead generators 16, 17 and 18 are arranged in circular manner about a central axis 144 which is isolated from the reactor cover plate by insulators 145 and 147 (see Fig. 7a) and fixed by the nut 148 screwed onto the electrode axis 144 against the reactor cover plate 142, which centrally sits on a glass cylinder 153 which is sealed by the upper glass cylinder sealing ring 156. (see also Fig. 5a). According to this preferred embodiment it is possible to maintain the production process by changeover for example from bead generator 16 to bead generator 17, where the bypass disc is located in the bypass position until all of the process parameters have reached their desired values. These include for example the positioning of the electrode at the bead break point (jet break) of the generated liquid stream of polymer solution A, to achieve an optimal dispersion effect of the formed beads.

For this purpose, the bypass pivot disc 25 together with the electrodes 24 are moved axially with the adjusting axis 149, motor driven with a linear drive 20, and through the bypass disc mounting 141. The adjusting axis 149, isolated by the electrode insulation is guided by the adjusting axis radial mountings 151, however is axially movable with respect thereto.

Production of microcapsules begins with the rotation of the bypass disc 25 to the pass through position, where the beads generated from the stream of polymer solution A are submersed into the polymer solution B in the region of the collector funnel 155 and further processed.

The apparatus comprises a bypass disc pivotable about the electrode axis 144, which is made of FDA USP Class VI conform synthetic material. A three-armed electrode 24 is arranged within the disc, which comprises three corresponding ring electrodes (see Fig. 5b). The bypass disc is pivotal about a hollow axis 144 and can be moved freely between a "bypass" position and a "pass through" position, which are exactly defined by a bypass stop 152 and the geometry of the bypass disc. One or more radially arranged permanent magnets 143 are arranged in the bypass disc 25 for sterile force transmission to the bypass disc 25, where the magnets react on a pivotal movement to a magnetic field movable outside of the sterile capsule reactor, for example generated by a magnetic plate movable parallel to the magnets 143.

Fig. 7b gives a schematic illustration of an alternative electrode configuration with three electrodes adjustable independently in axial direction and a central bypass disc for parallel operation of the oscillation units of the bead generators 16, 17 and 18, where one of the generators is shown in a partial section in side view. The fluid introduced into the oscillation chamber of a generator is mechanically driven to produce oscillations. According to this embodiment, the liquid initially flows out of the bead generator through the opening of the nozzle 23 as a stream and then breaks up into beads. The bead generators 16, 17 and 18 are arranged in the form of a circle about the central bypass axis 144 isolated from the reactor cover plate 142 by insulators 145 and 147 and fixed by the screwed down nut 148. The reactor cover plate sits on a glass cylinder 153 and a glass cylinder seal 156 (see Fig. 5a). According to this preferred embodiment, it is possible to operate the bead generators 16, 17 and 18 in parallel to shorten the production process, where the bypass disc is located in bypass position, until all of the process parameters have reached their desired value. The parameters include for example the positioning of the electrodes at the bead brake point of the respective liquid jet stream of the polymer solution A, which achieves an optimal dispersion effect of the formed beads.

For this, the electrodes 24 are movable on the electrode axis 144 by an electrode adjusting axis 165, driven by a linear motor drive 20. The electrode adjusting axis 165 is rotatable and sealed in isolated and sterile manner to the reactor cover plate 142 through insulators 163 and 164, is fixed by the nut 162 and sealed by the sealing ring 166.

The production of microcapsules begins with the rotation of the bypass disc 25 in the pass through position, where the beads generated from the stream of polymer solution A are collected in the region of the collection funnel 155 and immersed in the polymer solution B.

The apparatus comprises a bypass disc, rotatable about the electrode axis 144, without embedded electrodes, preferably made of FDA USP Class VI conform synthetic material. The bypass disc position is determined by the bypass stop 152 and the geometry of the bypass disc and lies on a circlip 167. One or more radial arranged permanent magnets 143 are provided in the bypass disc 25 for sterile force transmission to the bypass disc 25. These magnets react on a magnetic field, moved on the outside of the sterile capsule reactor, to produce a rotary movement. The magnetic field is generated for example by a magnetic plate moveable in parallel to the magnets 143.

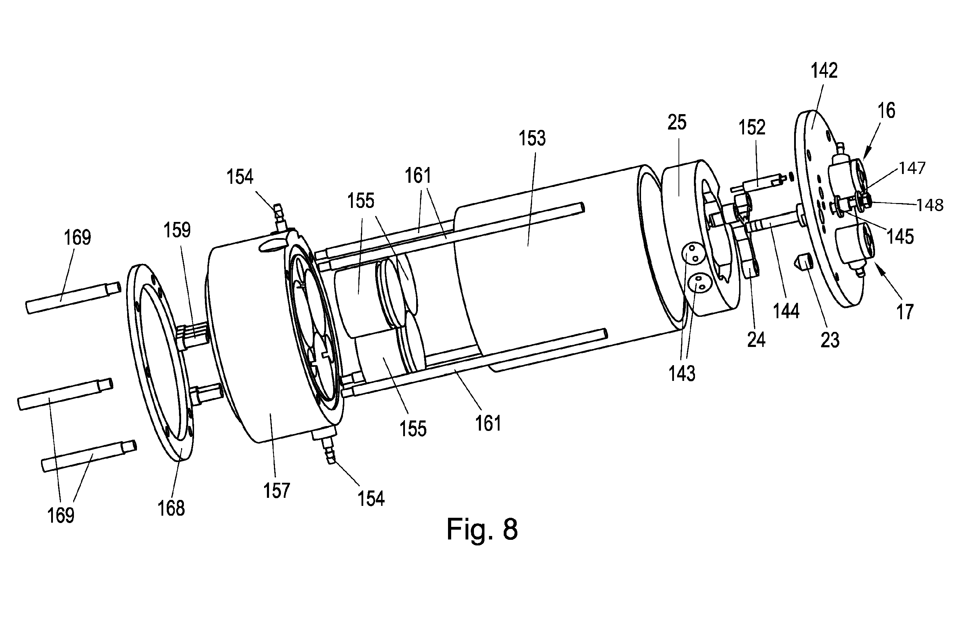

Fig. 8 shows a schematic exploded view of an apparatus for producing microcapsules, in which the bead generators 16 and 17 are shown mounted on the reactor cover plate 142. The electrode axis 144 is passed through a central opening in the reactor cover plate 142, where the electrode axis is electrically isolated from the reactor cover plate by insulators 145 and 147. The bypass stop 152 and the ring electrodes 24 can be seen next to the bypass disc 25 and the reactor cover plate 142. The two permanent magnets 143 are illustrated in the outer periphery of the bypass disc 25. In assembled condition, the bypass disc 25 is located in the glass cylinder 153, which is arranged between the reactor ground plate 157 and the reactor cover plate 142. Clamping rods 161 are provided to connect the reactor ground plate 157 with the reactor cover plate 142, which are connectable both to the reactor support ring 168 and the reactor cover plate 142. The collector funnels 155 (3 pieces) according to the present embodiment are mounted to the reactor ground plate 157, where the collector inlets 154 for the supply of polymer solution B are provided on the outer periphery of the reactor ground plate 157. The collector funnels 155 are secured within the reactor ground plate by screws 159. A support ring 168 is provided on the end of the reactor ground plate 157 opposite the bead generator 16, 17 in which rods 169 are screw mounted.

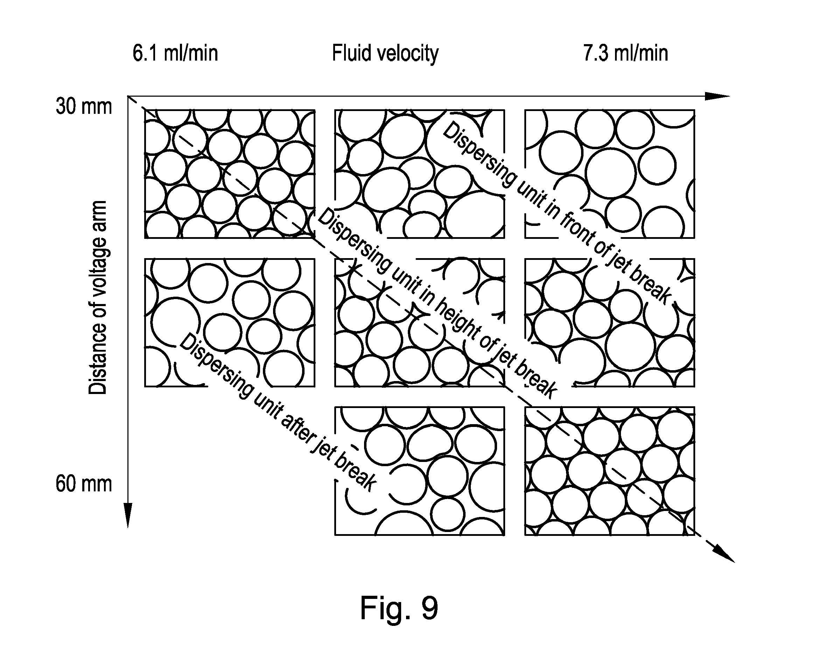

Fig. 9 shows the effect of flow velocity of polymer solution A and the spacing distance of the arms of the electrode 24 from the nozzle 23 on the homogeneity, size and shape of the produced microcapsules. The quality of the produced microcapsules is detected with preferably optical or electric sensors for automatic optimization. The optimal relation between the flow velocity of the polymer solution A and the distance of the electrode arms, within a given tolerance, is full-automatically adjusted based on the jet break (break point of the laminar jet) of the microcapsules. The system is preferably configured to be self-optimizing. Alternatively, when one parameter is set to a given constant value (flow velocity or distance of the voltage arm to the nozzle), an automatic adjustment of the other parameters can take place.

The figure illustrates schematic drawings based on microscopic images of sodium cellulose sulphate/poly-DADMAC capsules at various values for the flow velocity and the distance of the voltage arm, where other parameters are constant. When the pulsation arm is positioned above or below the jet break point for a given flow velocity, an insufficient dispersion of the beads results, which leads to irregularities in the homogeneity of the capsule size and shape.

In the following, a preferred embodiment of the method for controlling the apparatus according to the present invention for producing microcapsules is described, where a plurality of sensors and the information they provide are explained.

As described above, inlet sensors 13, 14, 15 are employed in the region of supply of polymer solution A (see main functional unit III in Fig. 1), which are provided before the bead generators 16, 17 or 18. Ultrasonic sensors can be used for example, which determine the flow velocity of polymer solution A through the generators 16, 17 or 18. The determination of the flow rate is relevant, for example because the capsule diameter increases with increasing flow rate, while other conditions including the frequency of the bead generator remaining constant, the jet break point of the capsules determined as the distance of the jet break point from the nozzle outlet increases. An increased flow rate leads to a greater stability of the undisturbed fluid stream (jet) and therefore to a reduction of the fall distance of the beads up to immersion in the polymer solution B. Said in a simple way, the distance of the break point from the nozzle, at constant frequency, increases when the velocity of the volumetric flow increases.

In addition, resistance strain gauges, piezo-electric sensors, capacitive or conductive sensors can be used at the inlet to determine the pressure of the polymer solution A prior to the oscillation unit of the bead generator 16, 17 and 18. This information can be used so that the corresponding control valves are open only after reaching a certain minimal pressure to achieve an immediate generation of a jet stream. It has the further advantage that no polymer solution A drops onto the electrodes of the apparatus, where the loss of polymer solution A is minimized and a short circuit of the electrical system is avoided.

Furthermore, PT100 (platinum temperature sensor 100 Ohm), Ntc (negative temperature coefficient), Ptc (positive temperature coefficient) or IR (infrared) sensors can be used in the region of the sensors 13, 14 and 15, in particular to determine the temperature of the polymer solution A passing through the bead generators 16, 17 and 18. Important here is that when the temperature of the polymer solution A drops, the viscosity of the solution increases and the distance of the break point of the jet stream from the nozzle changes. Furthermore, when the temperature changes, the stream geometry can become instable or even break off, whereas the capsule size can be negatively affected or the entire process can become instable to the point that it must be interrupted.

Furthermore, laser or turbidity sensors can be used in the region of sensors 13, 14 and 15, in particular to determine the particle concentration and distribution in polymer solution A, which passes through the bead generators 16, 17 or 18. A homogenous particle or cell distribution and/or the adjustment of a given particle or cell concentration in the suspension result in a controlled composition of the capsules at the time of completion of the production process.

Sensors can be used at the position 20 in the main functional unit III of Fig. 1, which determine the jet break at the exit of the bead generator 16, 17 or 18, by means of electrical voltage or by means of a laser, particle analyzing sensors, optical sensors or conductive sensors. With such sensors, both the position of the separation of the stream or jet into individual drops and the actual position of the electrode or electrodes can be determined.

Such a determination is especially important when an automatic adjustment of the electrode position is provided and the electrodes are to be arranged at height of the jet break point to ensure an optimal distribution of the beads.

According to a particularly preferred embodiment, the system regulates itself in case the jet break point shifts due to the influence of other parameters. In this manner, an optimization of the spreading of the stream between the bead generators 16, 17, 18 and the collector funnels 155, 155', 155" can be achieved. With this, a disintegration of beads or a sticking of several capsules together (mergence) can be avoided or minimized.

Reference sign 22 refers to a sensor for determining the bypass position, which may be an electronic, optical, laser, IR or light sensor. This information is important when starting the system, for example to ensure that the bypass disc remains in bypass position, until all process parameters have reached their desired values and to ensure that the bypass disc 25 is in the passage position during the production process.

Reference sign 27 in the main functional unit III in Fig. 1 refers to a sensor which is preferably provided as an optical sensor, for example to determine the frequency of a stroboscope (light flashes per time unit) and the light intensity of a corresponding flash). An optimization for the use by optical sensors (not shown) or by operators is made available, especially in respect of the frequency and also the intensity of the stroboscope employed. This has the advantage that the detection of beads by means of optical sensors or by operators is distinctly simplified. These sensors also provide input signals for regulation of the electrode voltage and the electrode position.

According to a further preferred embodiment of the present invention, sensors are used for determining the degree of dispersion or the homogeneity of the polymer solution A, which are preferably optical, ultrasonic, laser or image processing sensors.

These determine the liquid level by means of pressure, ultrasonic, optical sensors, conductive sensors, capacitive sensors, floating devices or electrical conductivity. Apart from the liquid level, other indirectly derivable operation parameters are of interest, for example the flow and mixing conditions and the average mixing retention time of the formed microcapsules in the collector funnel 11, 155' and 155". By means of the level control sensors an overflow or a run dry of a collector funnel can essentially be avoided.

Outlet sensors are provided after the funnels 155, 155', 155" and marked with reference signs 31, 32 and 33 in the main functional unit III in Fig. 1, which determine e.g. the temperature, flow velocity of the liquids and/or the capsules, the concentration of the capsules, the form and the size of the capsules. For example, Pt100, Ntc or Ptc sensors and also IR sensors can be used to determine the liquid temperature. In respect of the reaction itself, e.g. lowering the temperature reduces the reaction rate for forming an outer shell on the microcapsules and the viscosity of the total solution increases.

Ultrasonic sensors are preferably used for determining the flow velocity of the liquid since the capsule velocity within the line system increases with increasing flow velocity and thus the dwell period within the transport device, directly correlated to the reaction time period is reduced. Ultrasonic sensors, optical sensors or lasers can be used to determine the flow velocity of the capsules themselves. Conversely, a reduction of the flow velocity increases the retention time and therefore also the reaction time period and the degree of hardening of the microcapsules. Apart from the velocity of the capsules, the concentration of capsules can be determined with optical sensors, lasers, image processing sensors, turbidity measurements or particle analyzing sensors. The concentration distribution of the capsules can provide information on the mixing efficiency, the retention time, the flow characteristics and the reaction between the educts within the transport system.

The shape as well as the size of the capsules can be determined by optical sensors, lasers or image processing sensors. Information can also be gained on the viscosity of the polymer solution A, the bead formation following the bead generator and the flow rate in the funnels. Furthermore, the capsule size gives an indication of the process parameters of the bead generators (frequency, amplitude, position of the electrodes, viscosity and the flow rate of polymer solution A), whereas these actuating variables can be adjusted preferably through self-optimization until the capsules reach the desired size and shape, or a production stop is initiated if the specifications cannot be adjusted within predetermined limits.

Sensors 43, 44 and 45 in the outlet region of containers 34, 35 and 36 are provided in the main functional unit II in Fig. 1 of the apparatus for forming microcapsules, where such sensors are typically ultrasonic sensors or all types of sensors for measuring flow throughput. These are sensors used for example in the pharmaceutical industry for similar tasks. In addition, salt inductive sensors can be used or when e.g. poly-DADMAC is used, a refraction index sensor can be used.

The purpose of such sensors is the determination of the fluid quantity leaving the containers 37, 38 or 39, where the quantity is needed in particular for controlling the mixing ratio of the solutions for supply to the funnels. In addition, it is self-evident that temperature measurements can also be made for adjustment of the chemical reaction kinetics, the reaction time, the flow and mixing behaviour of the fluids, or the average retention time of the microcapsules in the funnels and within the reaction and transport device, which is determined by the flow rate of the fluids leaving containers 37, 38, 39.

According to the apparatus for producing microcapsules, the main functional unit IV comprises sensors 75, 76 and 77 as outlet sensors from the reactors 69, 70, 71. Preferably, sensors are used for determination of the temperature of the liquid, the flow rate of the liquid or the flow rate of the microcapsules, the turbidity of the capsules, the shape of the capsules and their size. Sensors can also be used to determine the concentration of the microcapsules and/or the concentration of the salts or the poly-DADMAC. For temperature determination, such sensors include PT100, Ntc or Ptc sensors or IR sensors, where it is to be noted that with a drop in the liquid temperature, the reaction rate between the reaction partners drops and the viscosity increases.

The flow rate can also be detected by ultrasonic sensors. Here it is to be observed that increasing flow rates of the liquid is accompanied by increasing transport velocity of the capsules and therefore the retention time of the capsules within the reaction fluid changes. In particular, the reaction time period for producing microcapsules reduces with increasing flow rate and with other conditions remaining constant. If the hardening of the capsules is insufficient, which can preferably be determined by the turbidity of the capsules or other optical, laser or image processing sensors, the flow velocity can be slowed by means of the pumps 122, 123 and 124 and therefore the dwell period in the reactors 69, 70 and 71 and thus the reaction time period is increased. Conversely, if the hardening is too extensive, the flow velocity might be increased. The system can be configured to be self-optimizing within given limits.

Optical sensors, ultrasonic sensors or lasers can be used to determine the flow rate of the capsules, where preferably the reaction time period of the capsules within the fluid is determined.

Optical sensors, lasers, image processing sensors and turbidity sensors also allow the measurement of the turbidity of the capsules themselves, which allows conclusions to be drawn on the membrane formation. The measurement of the shape of the microcapsules can also take place with optical sensors, lasers or image processing sensors and allow conclusions e.g. on the polymer solutions A and/or B, the bead formation or the flow rate in the funnels.

The determination of the microcapsules size preferably takes place with optical sensors, lasers or image processing sensors, where the size provides information on the process parameters of the bead generators (frequency and amplitude), the position of the electrodes, the viscosity of the fluids and the flow rates. To determine the concentration of microcapsules in the fluid, the use of optical sensors, lasers, image processing sensors, turbidity sensors, particle-analyzing sensors and the like are preferred, where the concentration distribution of the capsules provides information on the allocation of the capsules within the fluid or the retention time, the flow profile and the reaction of the reaction partners.

The determination of the salt or poly-DADMAC concentration in the fluid can take place preferably by salt inductive sensors and when poly-DADMAC is used, in conjunction with refraction index sensors. Important is that the salt concentration or the concentration of polymer solution B provides information on how fast the reaction takes place between the reaction partners or how the membrane formation is effected. Depending on the substance used, sensors can also be used for measuring the transmission/absorption, fluorescence, electrical conductivity, light scattering or substance-specific electrodes can be used. A number of measurement systems are known in the prior art, which can be used without undue burden.

The sensors 94, 95 and 96 of the main functional unit V in Fig. 1 of the apparatus for producing microcapsules are preferably outlet sensors arranged at the outlets of the washing solution containers 82, 83 and 84. Ultrasonic sensors are used for example as are known in the prior art and also used in the pharmaceutical industry. Salt inductive sensors and for certain polymers such as poly-DADMAC, refraction index sensors offer the possibility of determining the concentration.

The sensors can also be used for determining the flow rate and the concentration of the solutions released from the containers 82, 83 and 84. The measurement signals can be used directly to control the valves 85, 86 and 87 and/or the pumps 91, 92 and 93. The purpose of the flow rate measurement is to control the mixing ratio of the wash solutions or the components of the wash solution, with which the capsule formation, i.e. the reaction of the reaction partners is terminated. This is especially relevant when the capsules are further processed in a downstream procedure. Apart from the flow rate, the temperature of the reaction solutions must also be determined, in particular for controlling or regulating the reaction velocity with respect to the membrane thickness to be achieved. The temperature can be adjusted by a heat exchanger 97.

The reference sign 100 designates a sensor located at or near the inlet in the washing container 107, where the temperature of the liquid and also the concentration of the salt or poly-DADMAC solution and/or the turbidity of the microcapsules, their shape, form and concentration can be determined. For this, PT 100, Ntc, Ptc and IR sensors are used to determine the temperature of the liquid, since a reduction of the reaction temperature also reduces the reaction rate and also the cell metabolism is slowed. With respect to salt concentration of the solution, conductive sensors are preferably employed, where the salt concentration provides information on the dilution degree of the dissolved reaction partners. Refraction index sensors are preferably used to determine the concentration of the polymer solution B in the solution, where the polymer solution B concentration e.g. poly-DADMAC also provides information on its degree of dilution.

The measurement of the turbidity of the microcapsules takes place preferably with lasers or optical sensors, where the turbidity gives an indication of the membrane formation. The shape, the form and the concentration of the microcapsules are preferably determined with optical or image processing sensors, where the shape of the microcapsules gives an indication of the production process downstream and in some circumstances also the efficiency of the washing procedure. The determination of the size of the microcapsules also provides information on the production parameters of the bead generator (its frequency and amplitude, the position of the electrodes, the viscosity and the flow rates of the polymer solution A).

Finally, the concentration of the microcapsules in the solution gives an indication of the concentration distribution of the capsules, where this provides information on the mixing, the retention time, the flow profile and the reaction of the reaction partners.

The reference sign 99 of the main functional unit VI of the apparatus for producing microcapsules designates a sensor on the washing container, which provides information on the current liquid level in the washing container, the temperature of the liquid, the concentration of the salt and/or polymer e.g. poly-DADMAC solution, the turbidity of the microcapsules, their shape and size, the concentration of microcapsules and the pH value of the suspension. Preferably ultrasonic, conductive sensors, optical sensors or swimmers are used to determine the filling degree or the liquid level. The information on the level can also be used to control the capsule concentration and the charging and discharging of the washing container.

The turbidity measurement of the microcapsules takes place preferably with lasers or optical sensors, where the turbidity gives an indication of the membrane formation. The size and shape of the microcapsules are preferably determined with optical or image processing sensors, the shape of the microcapsules provides information on the production process downstream and the efficiency of the washing step. The size of the microcapsules again gives an indication of the process parameters of the bead generators and in particular the oscillation system (frequency and amplitude). Further it gives information on the position of the electrodes, the viscosity and the flow rates of the polymer solution A. The concentration of the microcapsules are preferably also detected with optical or image processing sensors, where the concentration distribution gives information on the mixing, the retention time, the flow profile and the reaction of the reaction partners. pH value of the suspension is preferably determined with a pH electrode, where a precisely adjusted pH value is necessary for protection of the particles or cells to be encapsulated and the chemical reaction of the reaction partners.

A sensor 112 is shown in the main functional unit VII of the apparatus for producing microcapsules, which determines the fundamental properties relating to quality of the microcapsules as so-called product sensors. Apart from the temperature of the liquid and the turbidity, the shape and size of the microcapsules, the concentration of the microcapsules and the flow rates both of the liquid and the microcapsules are determined. As already presented above, the temperature determination takes place by means of PT100, Ntc, Ptc or IR sensors. A temperature difference is preferably determined by subtracting the output temperature from the input temperature of the solution or solutions. Turbidity, shape and size of the microcapsules are preferably determined by optical or image processing sensors, where the turbidity of the capsules provides information on the membrane formation itself. The shape and size of the microcapsules gives indications of the transport conditions and further allows the determination of amount, i.e. the concentration of the microcapsules in the final solution. The concentration determination of the microcapsules can also take place with optical or image processing sensors, where the concentration distribution of the capsules provides information on the mixing, the retention time and the flow profile of the process. Transport of the capsules can in particular be optimized with this information.

The determination of the flow rate of the liquid preferably takes place with ultrasonic sensors where an increased flow rate enhances the capsule velocity within the transport path. Alternatively, optical sensors or lasers can also be employed.

The reference sign 115 represents a sensor for discharging non-useable liquid from the washing container 107. At this position, the flow rate, the salt concentration as well as the concentration of further components in the washing solution are determined. The further components are those present in the wash solution containers 82, 83 and 84 and/or components of the solution supplied by the lines 60, 61 and 62. The preferred sensors here include ultrasonic sensors or, depending on the components to be analyzed, sensors for measuring the transmission/absorption, fluorescence, electrical conductivity, light scattering, refraction or substance-specific electrodes, as are known in the prior art and used in the pharmaceutical industry. With the determination of the discharge flow rate, a relation between the flow, product removal and the retention time of the liquid in the washing vessel can be determined. Furthermore, this information on the concentration of polymer B or the wash solution components from the containers 82, 83 and 84 gives indications of the consumption and dilution of the dissolved reaction partners.

A pressure sensor is indicated with the reference sign 129 in the main functional unit VI, as is commonly used today in the prior art.

The sensors 178, 179 and 180 in Fig. 3b of the main functional unit IV in the apparatus for producing microcapsules are sensors associated with the washing containers, which provide information on the current fluid level in the respective containers, the temperature of the liquid, the concentration of the salt and/or the poly-DADMAC solution, the turbidity of the microcapsules, their shape and size, the concentration of the microcapsules and the pH value of the suspension. Preferred sensors include ultrasonic or conductive sensors, optical sensors or swimmers for determining the filling level. The information on the filling level can also be used for controlling the capsule concentration and the charging or discharging of the washing container.

**The present invention encompasses alone or in combination, inter alia,**
an apparatus for producing microcapsules with at least one bead generator 16, 17, 18, having at least one nozzle 23, 23', 23", passed by fluid in operation, with a liquid reservoir arranged before the nozzle, where the liquid reservoir comprises a membrane 137 at the region of at least one boundary wall for generating a mechanical oscillation in the liquid, and at least one reaction and transport device 155, 155', 155" containing a reaction medium, in which the beads generated in the bead generator 16, 17, 18 are received and transported for a predetermined reaction time period to allow for microcapsule generation through complexation between at least one first polymeric component of the beads and at least one second polymeric component of the reaction medium, characterized in that at least one electrode 24, 24', 24" movable with a drive substantially parallel to the nozzle axis, is arranged between the bead generator 16, 17, 18 and the reaction and transport device 155, 155', 155", which generates an electric field between an outlet region of the nozzle 23, 23', 23" and the electrode 24, 24', 24" for influencing the bead characteristics.

The apparatus for producing microcapsules with at least one bead generator 16, 17, 18, which comprises at least one nozzle 23, 23', 23" passed by fluid during operation with a liquid reservoir arranged before the nozzle, where the liquid reservoir comprises a membrane 137 arranged in the region of at least one boundary wall for producing a mechanical oscillation in the liquid, and at least one reaction and transport device 155, 155', 155" containing a reaction medium, in which the beads generated by the bead generator are received and transported for a predetermined reaction time period to allow for microcapsule generation through complexation between at least one first polymeric component of the beads and at least one second polymeric component of the reaction medium, characterized in that at least one electrode 24, 24', 24", movable with a controlled or regulated drive substantially parallel to the nozzle axis, is arranged between the bead generator 16, 17, 18 and the reaction and transport device 155, 155', 155", which produces an electric field between an outlet region of the nozzle 23, 23', 23" and the electrode 24, 24', 24" for influencing the bead properties, and means for controlling and/or regulating the apparatus for producing microcapsules, with which the electrode position, the mechanical oscillation in the liquid of the bead generators 16, 17, 18, the volumetric flow rates of the employed liquids, the electric field between the electrodes 24, 24', 24" and the nozzle outlet of the bead generators 16, 17, 18, the individual or plurality of components, groups of components or process parameters of the apparatus, combinations thereof and the like can be controlled and/or regulated.

An apparatus as described above, wherein the mechanical oscillation is piezo-electrically, pneumatically or electro-acoustically transmitted to the liquid.

An apparatus as described above, characterized in the apparatus comprises means for determining the process parameters, which are selected from a group consisting of optical sensors, lasers, inductive and/or capacitive sensors, conductive sensors, ultrasonic sensors, expansion measurement strips, piezo-electric sensors, Ptc sensors, Ntc sensors, IR sensors, turbidity sensors, particle analyzing sensors, pt 100 sensors, image processing sensors, swimmers, vibration sensors, combinations thereof and the like.

An apparatus as described above, characterized in that the process parameters are selected from a group consisting of bead size, bead shape, volumetric flow rate, flow velocity, transparency, pH value, concentration in particular of components contained in the liquids and/or beads, reaction time period, passage capacity of the flow paths, plugging of flow paths, voltage, charge of the electric field, combinations thereof and the like.

An apparatus as described above, characterized in that the control of the apparatus occurs substantially in real time.

An apparatus as described above, characterized in that the membrane 137 is made of at least one material selected from the group consisting of steel, in particular stainless steel, synthetic material such as poly(ether-ether-ketone) (PEEK), composite materials, combinations thereof and the like.

An apparatus as described above, characterized in that the membrane 137 has a thickness between 5 µm and 500 µm, preferably between 30 µm and 150 µm and in particular is or is about 90 µm.

An apparatus as described above, characterized in that the membrane 137 is driven in operation with a frequency between 100 Hz and 4000 Hz, preferably between 600 Hz and 3000 Hz and preferably with a completely variable amplitude.

An apparatus as described above, characterized in that the drive of the movable electrode 24, 24', 24" takes place with a device selected from the group consisting of electric, hydraulic and/or pneumatic motors, which either directly or indirectly cause the movement of at least one electrode.

An apparatus as described above, characterized in that the movable electrode 24, 24', 24" comprises at least one hollow-cylindrical region through which the beads fall through from the outlet of the nozzle 23, 23', 23" of the bead generator to the reaction and transport device 155, 155', 155".

An apparatus as described above, characterized in that the distance between the electrodes 24, 24', 24" and the outlet of the nozzle 23, 23', 23" is variable adjustable and preferably lies between 300 mm and 1 mm, preferably between 100 and 5 mm and in particular is or is about 10 mm.

An apparatus as described above, characterized in that a voltage is applied between the electrode 24, 24', 24" and the outlet region of the nozzle 23, 23', 23" which preferably lies between 0.5 kV and 3 kV and particularly preferred between 0.8 kV and 1.5 kV.

An apparatus as described above, characterized in that at least one further electrode is arranged in the outlet region of the nozzle 23, 23', 23".

An apparatus as described above, characterized in that the nozzle 23, 23', 23" is a singular or a concentric nozzle.

An apparatus as described above, characterized in that the liquid of the bead generator 16, 17, 18 contains a polymeric poly-electrolyte as a first component.

An apparatus as described above, characterized in that the reaction medium which receives the beads from the bead generator 16, 17, 18 contains a polymeric poly-electrolyte which has an opposite electric charge compared to the polymeric poly-electrolyte in the bead generator.

An apparatus as described above, characterized in that the liquid of the bead generator 16, 17, 18 contains as a first component a polymeric poly-cation, preferably dodecylamine, ethylene diamine, piperazine, methylene blue, arginine, triethyltetramine, spermine, more preferably poly(dimethylallyl ammonium chloride) (poly-DADMAC) or poly(vinyl benzyltrimethyl ammonium chloride)

An apparatus as described above, characterized in that the liquid of the bead generator 16, 17, 18 contains as the first component a polymeric poly-anion, preferably alginate, carboxymethyl cellulose, carrageenan, ester derivatives of cellulose, chondroitin sulphate, dextrane sulphate, heparin, poly(methylene-co-guanidine), poly(styrene sulphate), especially esters of cellulose and in particular cellulose sulphate, or combinations thereof.

An apparatus as described above, characterized in that the concentration of the first component in the liquid lies between 1% and 4% and has a viscosity in the range between 10 mPa and 500 mPa, preferably between 10 mPa and 200 mPa (measured with a Bohlin Visco 88 rotation viscosimeter).

An apparatus as described above, characterized in that the reaction medium, which receives the beads from the bead generator 16, 17, 18 contains a polymeric poly-cation.

An apparatus as described above, characterized in that the reaction medium contains a polymeric poly-cation with a quaternary ammonium group.

An apparatus as described above, characterized in that the reaction medium comprises a substance selected from the group consisting of dodecylamine, ethylene diamine, piperazine, methylene blue, arginine, triethyltetramine, spermine, in particular poly(dimethylallyl ammonium chloride) (poly-DADMAC) or poly(vinyl benzyltrimethyl ammonium chloride) preferably in a concentration range between 0.5 and 5%.

An apparatus as described above, characterized in that the liquid of the bead generator 16, 17, 18 contains alginate and the reaction medium which receives the beads from the bead generator contains bivalent cations, in particular salts of alkaline earth metals, preferably calcium or poly-L-lysine, poly(ally amine), poly(methylene-co-guanidine), heparin or carboxymethyl cellulose or combinations thereof.

An apparatus as described above, characterized in that the liquid of the bead generator 16, 17, 18 contains cellulose sulphate and the reaction medium in which the beads of the bead generator are received contains poly(dimethylallyl ammonium chloride).

An apparatus as described above, characterized in that the capsule diameter lies between 1 and 5000 nanometer, preferably between 100 and 1500 nanometer.

An apparatus as described above, characterized in that after a predetermined reaction time for forming capsules, the beads are removed from the reaction medium and preferably stored and/or washed and/or diluted in an isoosmotic solution and/or physiological sodium chloride solution and/or phosphate buffered saline (PBS) and/or a cell culture medium or combinations thereof.

An apparatus as described above, characterized in that the reaction and transport device 155, 155', 155" comprises at least one, preferably a plurality of collector regions, in which the beads are received in the reaction medium.

An apparatus as described above, characterized in that the collector regions 155, 155', 155" are funnel-like in shape

An apparatus as described above, wherein a predetermined volume of the reaction medium passes through the collector region 155, 155', 155".

An apparatus as described above, characterized in that following the collecting tray 155, 155', 155" a substantially tube-shaped transport section is provided in which the beads are transported, preferably substantially homogeneously distributed.

An apparatus as described above, characterized in that the tube-shaped transport section extends at least partially in spiral-shaped sections 69, such that the spiral axis is arranged preferably orthogonal to the gravitational field of the earth.

An apparatus as described above, characterized in that following the collecting tray 155, 155', 155", a reaction and transport device is arranged in the form of a stirrer vessel cascade comprising at least one stirrer vessel.

An apparatus as described above, characterized in that following the reaction and transport device, a diluent or wash solution is continuously supplied with which the complex formation reaction is stopped or strongly slowed.

A method for producing microcapsules comprising the steps:
a) producing a constant, pulsating volumetric flow of at least one liquid in the region of a liquid reservoir and a nozzle outlet for forming liquid beads;
b) producing a variable adjustable electric field between the region of the nozzle outlet 23, 23', 23" and an electrode 24, 24', 24" which is movable with a drive;
c) receiving beads generated at the nozzle outlet 23, 23', 23" in a transport and reaction medium;
d) transport of the beads along a predetermined flow path and forming an outer membrane on the beads by reaction of at least one first polymeric component of the beads with at least one second polymeric component of the reaction medium;
e) interruption of the reaction between the two components by dilution with a diluent or washing medium;
f) separation and concentration of the capsules formed out of the beads.

A method as described above, characterized in that the shape and/or size of the beads is controlled and/or regulated by the pulsation frequency, pulsation amplitude, the volume flow of the liquid and/or by the position or length and the strength of the electric field between the nozzle outlet 23, 23', 23" and the electrode 24, 24', 24".

A method as described above, characterized in that the reception of the beads after the nozzle outlet 23, 23', 23" takes place in a collecting tray 155, 155', 155", which is passed by a predetermined volumetric flow of the reaction medium.

A method as described above, characterized in that when passage capacity is lacking in at least one collecting tray 155, 155', 155" in operation, changeover is made to another functional collecting tray of the transport and reaction device 155, 155', 155".

A method as described above, characterized in that the reaction time period of the two polymeric poly-electrolytes along the transport path is controlled and/or regulated by the flow velocity of the reaction medium.

A method as described above, characterized in that the complex formation reaction following the transport and reaction device is stopped or strongly slowed by continuous supply of a diluent or wash solution, for example an isoosmotic solution, a physiological sodium chloride solution, phosphate buffered saline (PBS) and/or a cell culture medium.

A method as described above, characterized in that the microcapsules formed during the reaction time period are separated from the reaction medium in stepwise manner or alternatively continuously in the washing vessel, preferably a washing flask 107 or the reaction medium is diluted, preferably with a reaction-neutral solution, preferably a physiological sodium chloride solution and/or phosphate buffered saline (PBS) and/or a cell culture medium.

A method as described above, characterized in that the method is carried out by using one of the above described apparatuses.

A use of an apparatus as described above for producing microcapsules.

A use of an apparatus as described above for producing microcapsules in which living biological systems, preferably microorganisms, yeast cells, more preferably eukaryotic cells, tissue or sperms is enclosed.

A use of an apparatus as described above for producing microcapsules, in which chemical and biochemical substances, preferably enzymes, nucleic acids, proteins, catalysts, natural occurring substances and/or pharmaceutical substances is enclosed.

A method for controlling an apparatus for producing microcapsules as described above with the steps:
a) supplying a liquid with at least one first polymeric component to a bead generator 16, 17, 18,
b) producing beads in a bead generator 16, 17, 18,
c) receiving the beads in a liquid with at least one second polymeric component for forming a membrane layer on the microcapsules with the at least one first component,
d) controlling and regulating at least one process parameter of the apparatus depending on at least one parameter of the properties of the microcapsules.

A method as described above, characterized in that the determination of at least one parameter of the microcapsule properties makes use of a sensor, as described above.

A method as described above, characterized in that at least one process parameter according to claim 4 is used as the lead parameter for control and/or regulation.

A method as described above, where the property of the capsules preferably includes the size, shape, volume, amount, concentration, transparency or turbidity, texture, charge character, membrane structure or thickness, combinations thereof and the like.

## Claims

1. An apparatus for producing microcapsules comprising
at least one bead generator (16, 17, 18) having at least one nozzle passed by liquid in operation with a liquid reservoir arranged before the nozzle, wherein the liquid reservoir has a membrane (137) in the region of at least one boundary wall for producing a mechanical oscillation in the liquid and
at least one reaction and transport device (155, 155', 155") passed by a reaction medium, which receives the beads produced by the bead generator (16, 17, 18) and transports them for a predetermined reaction time period to allow for microcapsule generation through complexation between at least one first polymeric component of the beads and at least one second polymeric component of the reaction medium,
**characterized in that**
at least one electrode (24, 24', 24"), movable by a drive substantially parallel to the nozzle axis, is arranged between the bead generator (16, 17, 18) and the reaction and transport device (155, 155', 155"), which generates an electric field between the outlet region of the nozzle (23, 23', 23") and the electrode (24, 24', 24") to influence the bead properties.

2. Apparatus according to claim 1, **characterized in that**
means for control and/or regulation of the apparatus for producing microcapsules are provided, with which the electrode position, the mechanical oscillation in the liquid of the bead generators (16, 17, 18), the volumetric flow rates of the employed media, the electric field between the electrodes (24, 24', 24") and the nozzle outlet of the bead generators (16, 17, 18), the individual or a plurality of components, groups of components or processed parameters of the apparatus, combinations thereof or the like can be controlled and/or regulated.

3. Apparatus according to any one of the preceding claims, **characterized in that**
the apparatus comprises means for determining process parameters, which are selected from the group consisting of optical sensors, lasers, inductive and/or capacitive sensors, conductive sensors, ultrasonic sensors, expansion measurement stripes, piezo-electric sensors, Ptc sensors, Ntc sensors, IR sensors, turbidity sensors, particle analyzing sensors, pt 100 sensors, image processing sensors, swimmers, vibration sensors, combinations thereof and the like.

4. Apparatus of any one of the preceding claims, **characterized in that**
the process parameters are selected from the group consisting of bead size, bead shape, volumetric flow rate, flow velocity, transparency, pH value, concentration, preferably of components contained in the liquids and/or the beads, reaction time period, passage capacity of the flow paths, plugging of flow paths, voltage, charge of the electric field, combinations thereof and the like.

5. Apparatus of any one of the preceding claims, **characterized in that**
the control of the apparatus takes place substantially in real time.

6. Apparatus of any one of the preceding claims, **characterized in that**
the membrane (137) is produced of at least one material selected from the group consisting of steel, preferably stainless steel, synthetic material, preferably poly(ether ether ketone) (PEEK), composite materials, combinations thereof and the like.

7. Apparatus of any one of the preceding claims, **characterized in that**
the membrane (137) has a thickness in the range between 5 µm and 500 µm, preferably between 30 µm and 150 µm and is in particular about 90 µm.

8. Apparatus of any one of the preceding claims, wherein the membrane (137) is driven is operation with a frequency between 100 Hz and 4000 Hz, preferably between 600 Hz and 3000 Hz and more particularly with a completely variable amplitude.

9. Apparatus of any one of the preceding claims, **characterized in that**
the drive of the movable electrode (24, 24', 24") takes place with a device selected from the group consisting of electric, hydraulic and/or pneumatic motors, which directly or indirectly cause the movement of at least one electrode.

10. Apparatus of any one of the preceding claims, **characterized in that**
the movable electrode (24) has a substantially hollow-cylindrical region through which the beads from the outlet of the nozzle (23, 23', 23") of the bead generator drop through to the reaction and transport device (155, 155', 155").

11. Apparatus of any one of the preceding claims, **characterized in that**
the distance between the electrodes (24, 24', 24") and the outlet of the nozzle (23, 23', 23") is variable and preferably lies between 300 mm and 1 mm, more preferably between 100 and 5 mm and in particular is about 10 mm.

12. Apparatus of any one of the preceding claims, wherein a voltage is applied between the electrode (24, 24', 24") and the outlet region of the nozzle (23, 23', 23"), which preferably lies between 0.5 kV and 3 kV and more preferably between 0.8 kV and 1.5 kV.

13. Apparatus of any one of the preceding claims, **characterized in that**
a further electrode is arranged in the outlet region of the nozzle (23, 23', 23").

14. Apparatus of any one of the preceding claims, wherein the liquid of the bead generator (16, 17, 18) comprises alginate or carboxymethyl cellulose or carrageenan or chondroitin sulphate or dextrane sulphate or heparin, or poly(methylene-co-guanidine) or poly(styrene sulphate) or an ester derivative of cellulose, preferably sodium cellulose sulphate (NaCS) as the first component.

15. Apparatus of any one of the preceding claims, **characterized in that**
the concentration of the first component in the liquid lies between 1% and 4% and has a viscosity in the range of between 10 mPa and 500 mPa, preferably between 10 mPa and 200 mPa (measured with a Bohlin Visco 88 rotation viscosimeter).

16. Apparatus of any one of the preceding claims, **characterized in that**
the reaction medium comprises a substance as the second component which is selected from the group of polymers with quaternary ammonium groups selected from dodecylamine, ethylene diamine, piperazine, methylene blue, arginine, triethyltetramine, spermine, in particular poly(dimethylallyl ammonium chloride) (poly-DADMAC) or poly(vinyl benzyltrimethyl ammonium chloride) preferably in a concentration range between 0.5 and 5%.

17. Apparatus of any one of the preceding claims, **characterized in that**
the beads are separated from the reaction medium after a predetermined reaction time period between the first and second components for forming capsules and are stored and/or washed and/or diluted, preferably in a physiological sodium chloride solution and/or phosphate buffered saline (PBS) and/or a cell culture medium.

18. Apparatus of any one of the preceding claims, **characterized in that**
the reaction and transport device (155, 155', 155") comprises at least one, preferably a plurality of collector sections, in which the beads are received in the reaction medium.

19. Apparatus of any one of the preceding claims, **characterized in that**
the collector sections (155, 155', 155") have a funnel-like configuration and are passed by a predetermined volume of a reaction medium.

20. Apparatus of any one of the preceding claims, **characterized in that**
a substantially tube-shaped transport section follows the collecting tray (155, 155', 155") in which the beads are transported, preferably in substantially homogeneous distribution.

21. Apparatus of any one of the preceding claims, **characterized in that**
the tube-shaped transport section extends at least partially in spiral-shape (69), the spiral axis being arranged substantially orthogonal to the gravitational field of the earth.

22. Method for producing microcapsules comprising the steps:
• producing a constant, pulsating volumetric flow of at least one liquid in the region of a liquid reservoir and a nozzle outlet for forming liquid beads;
• generating a variable electric field between the region of the nozzle outlet (23, 23', 23") and an electrode (24, 24', 24") wherein the electrode is movable with a drive;
• receiving the beads produced at the nozzle outlet (23, 23', 23") in a transport and reaction medium.
• transporting the beads along a predetermined flow path and forming an outer membrane on the beads through reaction of at least one first polymeric component in the beads and at least one second polymeric component in the reaction medium;
• interruption of the reaction between the two polymeric components by dilution with a diluent or washing medium;
• separation and concentration of the microcapsules formed out of the beads from the reaction medium.

23. Method according to claim 22, **characterized in that**
the shape and/or size of the beads in operation is controlled and/or regulated substantially by the pulsation frequency, pulsation amplitude, volumetric flow rate of the liquid and/or by the position or length and strength of the electric field between the nozzle outlet (23, 23', 23") and the electrode (24, 24', 24").

24. Method according to claim 22 or 23, **characterized in that**
the reception of the beads following the nozzle outlet (23, 23', 23") takes place in a collecting tray (155, 155', 155") which is passed by a predetermined volumetric flow of the reaction medium.

25. Method according to any one of the claims 22 to 24, **characterized in that**
when passage capacity is lacking during operation, changeover is made from at least one collecting tray (155, 155', 155") to at least one other collecting tray in the transport and reaction device.

26. Method of any one of the claims 22 to 25, **characterized in that**
the reaction time period of the two components is controlled and/or regulated along the transport path through the flow velocity of the reaction medium.

27. Method of any one of the claims 22 to 26, **characterized in that**
microcapsules formed during the reaction time period are separated in a washing vessel (107) in stepwise manner or continuously from the reaction medium or the reaction medium is diluted, preferably with a reaction-neutral solution, for example a physiological sodium chloride solution and/or phosphate buffered saline (PBS) and/or a cell culture medium.

28. Method of any one of the claims 22 to 27, **characterized in that**
the method is carried out with at least one apparatus of any one of the claims 1 to 21.

29. Use of an apparatus of any one of the claims 1 to 21 for producing microcapsules.

30. Method for controlling an apparatus for producing microcapsules of any one of the claims 1 to 21 comprising the steps:
(a) supplying a liquid with at least one first polymeric component to a bead generator (16, 17, 18);
(b) producing beads with the bead generator (16, 17, 18);
(c) receiving the beads with a liquid having at least one second polymeric component for forming a membrane layer on the microcapsules with the at least one first polymeric component;
(d) controlling and regulating at least one process parameter of the apparatus depending on at least one parameter of the microcapsule properties.

31. Method of claim 30, **characterized in that**
at least one sensor according to claim 3 is used to determine the at least one parameter of the microcapsule properties.

32. Method according to claim 30, **characterized in that**
at least one process parameter according to claim 4 is used as the lead parameter for control and/or regulation.

33. Method according to claim 30, **characterized in that**
the property of the microcapsules is preferably the size, shape, volume, amount, concentration, transparency or the turbidity, the texture, charge character, membrane structure or thickness, combinations thereof and the like.
